(19) Europäisches Patentamt
European Patent Office
Office européen des brevets

(11) EP 2 119 735 B1

(12) # EUROPÄISCHE PATENTSCHRIFT

(45) Veröffentlichungstag und Bekanntmachung des Hinweises auf die Patenterteilung:
**11.07.2012 Patentblatt 2012/28**

(51) Int Cl.:
***C08G 18/08*** *(2006.01)* ***C08G 18/28*** *(2006.01)*
***C08G 18/12*** *(2006.01)* ***C09J 175/08*** *(2006.01)*
*C08G 18/48* *(2006.01)* *C08G 18/66* *(2006.01)*

(21) Anmeldenummer: **09159432.5**

(22) Anmeldetag: **05.05.2009**

(54) **Hotmelt-Verfahren zur Herstellung eines chemisch vernetzten Polyurethanfilms**

Hot melt method for the preparation of a chemically cross-linked polyurethane film

Procédé de fabrication par voie fondue d'un film de polyuréthane réticulé chimiquement

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **13.05.2008 DE 102008023252**

(43) Veröffentlichungstag der Anmeldung:
**18.11.2009 Patentblatt 2009/47**

(73) Patentinhaber: **TESA SE**
**20253 Hamburg (DE)**

(72) Erfinder:
- **SCHÜMANN, Dr. Uwe**
**25421 Pinneberg (DE)**
- **WEILAND, Kirstin**
**21035 Hamburg (DE)**
- **Hansen, Sven**
**22765 Hamburg (DE)**
- **von Possel, Esther**
**20357 Hamburg (DE)**

(56) Entgegenhaltungen:
**EP-A- 0 135 111** **EP-A- 1 469 055**
**EP-A- 1 757 632**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Hotmelt-Verfahren zur kontinuierlichen Herstellung eines chemisch vernetzten Polyurethanfilms zur bevorzugten Verwendung als Schicht in einem Klebeband oder in einem selbstklebenden Artikel.

Klebebänder können einer hohen Scherbelastung oder einer anderen auf sie im verklebten Zustand wirkenden Dauerbelastung, wie zum Beispiel einer Schäl- oder Kippscherbelastung, insbesondere bei höheren Temperaturen, nur dann über einen längeren Zeitraum widerstehen, wenn sie chemisch vernetzt sind. Die chemische Vernetzung muss für alle Schichten des Klebebandes gegeben sein, da alle Schichten von der Dauerbelastung betroffen sind.

Um chemische Vernetzungen in Polymerfilmen und insbesondere in solchen, die als Schichten in Klebebändern verwendet werden, zu erzielen, sind vielfältige Technologien bekannt. Die meisten Technologien gehen entweder von lösungsmittelbasierten, vernetzungsfähigen Beschichtungssystemen oder von reaktiven Systemen, die bei Raumtemperatur auch ohne das Hinzufügen eines Lösungsmittel flüssig, sirupartig oder pastös sind, aus. Bei den bei Raumtemperatur flüssigen, sirupartigen oder pastösen lösemittelfreien Reaktivsystemen wird das Polymer in der Regel erst während der Beschichtung gebildet, während es bei den lösungsmittelbasierten Systemen üblicherweise schon vor der Beschichtung unvernetzt in Lösung vorliegt.

Polymerfilme, die durch Beschichtung eines in einem Lösungsmittel gelösten Polymers und anschließendes Abdampfen des Lösungsmittels erhalten werden, können zum Beispiel vernetzt werden, indem kurz vor der Beschichtung dem im Lösungsmittel gelösten Polymer ein chemischer Vernetzer zugemischt wird. Bei Raumtemperatur ist so ein System im Hinblick auf die Erfordernisse des Beschichtungsprozesses im Allgemeinen ausreichend lange stabil. Während des Abdampfens des Lösungsmittels im Trockenkanal bei höheren Temperaturen springt dann die Vernetzungsreaktion an, so dass der Polymerfilm schließlich chemisch vernetzt.

Lösungsmittelbasierte Technologien haben aber den grundsätzlichen Nachteil, dass sie nicht zur Herstellung dicker Schichten geeignet sind, insbesondere dann nicht, wenn mit einer wirtschaftlich vertretbaren Geschwindigkeit beschichtet werden soll. Bereits bei Schichtdicken ab ca. 100 bis 150 μm kommt es zur vermehrten, sichtbaren Bläschenbildung durch das abdampfende Lösungsmittel und damit zu deutlichen Qualitätseinbußen, so dass eine Verwendung als Schicht in einem Klebeband dann nicht mehr in Frage kommt. Auch bei der Herstellung dünnerer Schichten ist die Beschichtungsgeschwindigkeit durch die Notwendigkeit, das Lösungsmittel abzudampfen, erheblich limitiert. Zudem verursachen lösemittelbasierte Beschichtungsprozesse erhebliche Prozesskosten durch die Notwendigkeit der Lösemittelrückgewinnung oder -verbrennung.

Reaktivsysteme, die ohne Zugabe von Lösemitteln bei Raumtemperatur flüssig, sirupartig oder pastös sind, sind ebenfalls in vielfältiger Weise einer Vernetzung zugänglich. Viele der allgemein bekannten zweikomponentigen Polyurethane, Epoxide oder Silikone sind typische Beispiele für flüssige, lösemittelfreie, vernetzbare Reaktivsysteme. Klebebänder bzw. Klebebandschichten auf Basis sirupartiger Komponenten sind zum Beispiel in EP 0 259 094 B1 oder in EP 0305 161 B1 beschriebenen, in denen der Polymeraufbau bzw. die Vernetzung durch Photopolymerisation erzielt wird. Flüssige oder pastöse Reaktivsysteme werden im Zusammenhang mit der Herstellung von Klebebandschichten zum Beispiel in EP 0894 841 B1 oder in EP 1 095 993 B1 beschrieben.

Mit lösemittelfreien Reaktivsystemen der beschriebenen Art können sowohl dünne als auch dicke Schichten hergestellt werden, was einen großen Vorteil gegenüber lösemittelbasierten Systemen darstellt. Außerdem sind mit den beschriebenen Systemen die viskoelastischen Eigenschaften in vielfältiger Weise variier- und einstellbar, so dass häufig auf ein bestimmtes Anforderungsprofil genau zugeschnittene, maßgeschneiderte Klebebandschichten entwickelt werden können.

Bei Raumtemperatur flüssige, sirupartige oder pastöse Stoffe haben aber den Nachteil, dass sie in diesem Zustand nicht oder zumindest nicht mit konstanter Schichtdicke aufgewickelt werden können. Mit konstanter Schichtdicke können nur feste Polymerfilme aufgewickelt werden. Die Verfestigung lösemittelfreier Reaktivsysteme, die bei Raumtemperatur flüssig sind, ist an den Fortschritt, also das Voranschreiten der chemischen Reaktion gekoppelt. Der Reaktionsfortschritt benötigt eine gewisse Zeit, die gewartet werden muss. Erst wenn es zur Verfestigung des Films durch einen genügend hohen Umsetzungsgrad der jeweiligen chemischen Reaktion gekommen ist, kann der auf eine Hilfsfolie beschichtete Film aufgewickelt werden. Somit sind solche Systeme in der Beschichtungsgeschwindigkeit erheblich limitiert.

Systeme, deren Polymeraufbau und deren Vernetzung von außen zum Beispiel durch UV- oder ESH-Strahlung initiiert wird, haben in der Regel den zusätzlichen Nachteil, dass es nur dann zu einem Polymeraufbau mit durchgehend homogenen Eigenschaften kommt, wenn die Strahlung gleichmäßig alle am Polymeraufbau beteiligten Moleküle durch die gesamte Dicke des Films hindurch erreicht. Dies ist insbesondere bei hohen Schichtdicken oder bei mit Füllstoffen gefüllten Systemen oft nicht der Fall, so dass solche Filme dann ein inhomogen vernetztes Polymergerüst aufweisen.

Um hohe Beschichtungsgeschwindigkeiten ohne eine grundsätzliche Dickenlimitierung erzielen zu können, haben sich Hotmelt-Beschichtungsprozesse, insbesondere Extrusionsprozesse bewährt. In so einem Prozess werden bei Raumtemperatur feste, schmelzbare Polymere (Hotmelts) im geschmolzenen Zustand bei höheren Temperaturen

zu einem Film ausgeformt und in der Regel auf eine Hilfsfolie beschichtet. Nach Abkühlung und damit Verfestigung kann sofort aufgewickelt werden. Die Aufwickelfähigkeit ist nicht an den Fortschritt einer chemischen Reaktion gebunden. Im Klebebandbereich werden vor allem Styrol-Blockcopolymer-haltige Haftklebstoffe, beschrieben beispielsweise in DE 10003318 A1 oder DE 10252088 A1, auf diese Weise beschichtet.

Auch thermoplastische Polyurethane können in Hotmelt-Prozessen verarbeitet werden. DE-A 2059570 beschreibt beispielsweise ein kontinuierliches Einschritt-Herstellungsverfahren für ein thermoplastisches, unporiges Polyurethan. Die Herstellung thermoplastisch verarbeitbarer Polyurethane aus einem zunächst als Zwischenstufe hergestellten OH-terminierten linearen Prepolymer ist beispielsweise in DE102005039933 beschrieben. Auch DE 22 48 382 C2 beschreibt die Herstellung von thermoplastischen Polyurethanen aus OH-terminierten Prepolymeren in einem mehrstufigen Prozess. In EP 0135 111 B1 wird die Herstellung von verzweigten, aber thermoplastisch verarbeitbaren und somit nicht vernetzten Polyurethanen in einem mehrstufigen Verfahren beschrieben.

Hotmelt-Beschichtungsprozesse auf Basis thermoplastischer oder thermoplastisch verarbeitbarer Polymere haben zwar die Vorteile einer hohen erzielbaren Beschichtungsgeschwindigkeit sowie der Herstellbarkeit dicker Schichten, führen aber zu Polymerfilmen, die nicht oder zumindest nicht ausreichend vernetzt sind, so dass diese Filme als Klebebandschichten, bei denen es auf eine hohe dauerhafte Belastbarkeit, insbesondere bei höheren Temperaturen ankommt, nicht geeignet sind.

Die Extrusion von Polyurethanelastomeren unter Mitverwendung von Triolen, die zu einem vernetzten Charakter der Elastomere führen, ist beispielsweise aus DE-A 1964834 und aus DE 23 02 564 C3 bekannt. In diesen Schriften wird aber die Umsetzung flüssiger Ausgangsstoffe beschrieben, so dass der Nachteil vorliegt, dass vor dem Aufwickeln solcher Elastomere die vom Reaktionsfortschritt abhängige Verfestigung abgewartet werden muss.

Hotmelt-Beschichtungsprozesse, die zu vernetzten Polymerfilmen führen, sind zum Beispiel aus DE 10 2004 044 086 A1 bekannt. Dort wird ein Verfahren zur Herstellung eines Klebebandes auf Basis eines Acrylat-Schmelzhaftklebers beschrieben, dem im geschmolzenen Zustand in einem Extruder ein thermischer Vernetzer zugesetzt wird.

Ein Nachteil des dort beschriebenen Verfahrens ist die Notwendigkeit, den Acrylat-Schmelzhaftkleber zunächst in einem Lösemittel polymerisieren zu müssen und dieses Lösemittel anschließend mittels eines Aufkonzentrationsextruders wieder entfernen zu müssen. Ein weiterer Nachteil ist das relativ hohe Molekulargewicht des Polyacrylats (gewichtsgemitteltes $M_W$: 300000 bis 1500000 g/mol). Hohe Molekulargewichte erfordern hohe Verarbeitungstemperaturen und damit hohe Prozesskosten und können außerdem bei Extrusionsprozessen zu ungleichen Polymereigenschaften in Längs- und Querrichtung führen.

Aufgabe der vorliegenden Erfindung ist es, ein Verfahren zur Verfügung zu stellen, mit dem lösungsmittelfrei und kontinuierlich chemisch vernetzte und somit nicht schmelzbare Polymerfilme zur Verwendung als Schichten in Klebebändern hergestellt werden können, wobei es möglich sein soll, die Filme nach der Beschichtung auf einen Hilfsträger aufzuwickeln, ohne dass vorher der Reaktionsfortschritt eines während der Beschichtung ablaufenden reaktiven Prozesses abgewartet werden muss.

Insbesondere sollten die folgenden Kriterien erfüllt werden: Die chemische Basis der Polymerfilme soll so gewählt werden, dass sie einen breiten Variationsspielraum für die Einstellung viskoelastischer Eigenschaften bietet, so dass die Entwicklung maßgeschneiderter auf variable, sich ändernde Anforderungsprofile hin zugeschnittene Klebebandschichten damit ermöglicht wird. Mit dem Verfahren soll sowohl die Herstellung von Trägerschichten, Haftklebstoffschichten als auch Funktionsschichten wie zum Beispiel Primerschichten möglich sein. Das Verfahren soll so gestaltet sein, dass es die Nachteile des Standes der Technik nicht, oder zumindest nicht in dem Umfang aufweist. Vorzugsweise soll der gesamte Prozess, inklusive einer Zwischenproduktfertigung, lösungsmittelfrei erfolgen, ohne dass damit die Verwendung von Lösungsmittel gänzlich ausgeschlossen werden soll. Zudem sollen die vernetzten, nicht schmelzbaren Polymerfilme in Längs- und Querrichtung gleiche Eigenschaften haben.

Gelöst wird diese Aufgabe durch ein Verfahren, wie es im Hauptanspruch dargelegt ist. Gegenstand der Unteransprüche sind dabei vorteilhafte Weiterbildungen des Verfahrens.

Demgemäß betrifft die Erfindung das im Folgenden beschriebene Verfahren zur Herstellung eines chemisch vernetzten Polyurethanfilms umfassend die folgenden Teilschritte:

A) Chemische Umsetzung einer Mischung umfassend mehrere Polyole mit einem oder mehreren Polyisocyanaten, wobei mindestens eines der Polyole oder mindestens eines der Polyisocyanate tri- oder höherfunktionelle Moleküle enthält und wobei das Verhältnis der Gesamtanzahl der Isocyanatgruppen zur Gesamtanzahl der Hydroxylgruppen kleiner als 1,0 ist, zu einem hydroxyl-funktionalisierten, schmelzfähigen Reaktionsprodukt, im Folgenden hydroxyl-funktionalisiertes Polyurethan-Hotmelt-Prepolymer genannt,

B) Einbringen des hydroxyl-funktionalisierten Polyurethan-Hotmelt-Prepolymers sowie eines oder mehrerer Polyisocyanate in ein kontinuierlich arbeitendes Mischaggregat, wobei in dem Mischaggregat eine chemische Umsetzung des hydroxyl-funktionalisierten Polyurethan-Hotmelt-Prepolymers in der Schmelze mit den Polyisocyanaten stattfindet,

C) Beschichtung der aus dem Mischaggregat austretenden Schmelze auf ein zulaufendes bahnförmiges Material

oder zwischen zwei zulaufenden bahnförmigen Materialien, wobei die im Teilschritt B) gestartete Umsetzung fortschreitet.

Teilschritt A) ist ein Vorbereitungsschritt. In diesem Teilschritt erfolgt aus flüssigen oder festen Polyolen, Polyisocyanaten und gegebenenfalls weiteren Polyurethan-Ausgangsstoffen die Umsetzung zu einem hydroxyl-funktionalisierten Polyurethan-Hotmelt-Prepolymer. Insbesondere ist dieses Polyurethan-Hotmelt-Prepolymer ein hydroxyl-funktionalisiertes, verzweigtes Polyurethan-Hotmelt-Prepolymer.

Polymere oder Prepolymere, die die Eigenschaft haben, schmelzfähig und somit thermoplastisch verarbeitbar zu sein, werden in dieser Schrift, wie im Sprachgebrauch des Fachmanns üblich, als Hotmelts bezeichnet.

Unter einem Polyurethan-Hotmelt-Prepolymer wird in dieser Schrift ein durch chemische Umsetzung einer Mischung umfassend mehrere Polyole mit einem oder mehreren Polyisocyanaten erhaltenes Reaktionsprodukt verstanden, das nach dem Erreichen der Vollständigkeit dieser Umsetzung bei Raumtemperatur derart fest und formstabil ist, dass bei Raumtemperatur eine Verarbeitung in bekannten Mischaggregaten ohne das Hinzufügen von Lösemitteln, Verdünnungsmitteln oder anderer, die Viskosität herabsetzender Zusatzstoffe nicht möglich ist. Bekannte Mischaggregate sind beispielsweise Kneter, Innenmischer, Extruder, Planetwalzenextruder, Planetenmischer oder Dissolver. Die Verarbeitbarkeit eines schmelzfähigen Reaktionsprodukt im Sinne dieser Schrift ist erst in der Wärme möglich, wobei die Wärme von außen durch Beheizung zugeführt oder durch Scherung erzeugt werden kann. Typische Verarbeitungstemperaturen für schmelzfähige Reaktionsprodukte im Sinne dieser Schrift liegen zwischen 70° bis 160°C, mindestens betragen sie 40°C. Als Raumtemperatur wird in dieser Schrift der Temperaturbereich von 20°C bis 25°C, idealerweise 23°C, verstanden.

Ein schmelzfähiges Reaktionsprodukt im Sinne dieser Schrift hat nach dem Erreichen der Vollständigkeit der Umsetzung eine mit einem Rheometer im Oszillationsversuch bei einer sinusförmig oszillierenden Scherbeanspruchung in einer Platte-Platte-Anordnung, einer Temperatur von 23°C und einer Oszillationsfrequenz von 10 rad/s gemessene komplexe Viskosität von mindestens 8000 Pas, vorzugsweise mindestens 10000 Pas. Bei 70°C und einer Frequenz von 10 rad/s beträgt die komplexe Viskosität mindestens 300 Pas, vorzugsweise mindestens 500 Pas.

Das hydroxyl-funktionalisierte Polyurethan-Hotmelt-Prepolymers enthält bereits Verzweigungsstellen. Verzweigungsstellen gehen von allen tri- und höherfunktionellen Molekülen aus, welche am chemischen Aufbau des hydroxyl-funktionalisierten Polyurethan-Hotmelt-Prepolymers beteiligt sind. Das Ausmaß der Verzweigung wird im Wechselspiel mit der Länge der erzeugten Prepolymerketten so eingestellt, dass die Schmelzbarkeit dieses hydroxyl-funktionalisierten Polyurethan-Prepolymers gewährleistet ist, dass sich also keine vernetzten Strukturen ausbilden. Erst wenn der Anteil an Verzweigungsstellen im Prepolymer ein bestimmtes Maß überschreitet, deren Berechnung bzw. rechnerische Abschätzung im Folgenden kurz beschrieben wird, setzt Gelierung ein, das heißt, es bilden sich vernetzte Strukturen aus.

Das Verhältnis der Gesamtanzahl der Isocyanat-Gruppen zur Gesamtanzahl der Hydroxylgruppen, im Folgenden kurz NCO/OH-Verhältnis genannt, der am molekularen Aufbau des verzweigten, thermoplastisch verarbeitbaren, hydroxyl-funktionalisierten Polyurethan-Hotmelt-Prepolymers beteiligten Ausgangsstoffe muss kleiner als 1,0 sein, um die Hydroxyl-Funktionalisierung zu erreichen. Um vernetzte Strukturen auszuschließen, darf der sogenannte Gelpunkt nicht überschritten werden. Der theoretische Gelpunkt lässt sich mit der Gelpunktsgleichung von P.J.Flory berechnen. Eine aus der Flory-Gleichung abgeleitete Formel zur Abschätzung des Gelierungs-NCO/OH-Verhältnisses in Polyurethan-Bildungsreaktionen aus Diolen und Triolen mit Diisocyanaten im Unterschuss, lautet:

$$\left[\frac{NCO}{OH}\right]_{Gelierung} = \frac{1}{1+\dfrac{1}{\dfrac{(Diol\text{-}OH)}{(Triol\text{-}OH)}+1}}$$

Wird das Gelierungs-NCO/OH-Verhältnis erreicht oder überschritten, muss mit der Ausbildung vernetzter Strukturen, also mit dem Einsetzen einer Gelierung, gerechnet werden. In der Praxis ist dies allerdings häufig nicht der Fall, da viele der kommerziell erhältlichen Diole und Triole auch einen meist undefiniert hohen Anteil an monofunktionellen Molekülen enthalten. Somit liefert die Formel nur einen ungefähren Anhaltspunkt, ab welchem NCO/OH-Verhältnis der tatsächliche Gelpunkt erreicht wird.

Mit Diol-OH ist in dieser Formel die Gesamtanzahl der an der Prepolymer-Bildungsreaktion beteiligten, von

difunktionellen Polyolen herrührenden Hydroxylgruppen gemeint. Mit Triol-OH ist entsprechend die Gesamtanzahl der an der Prepolymer-Bildungsreaktion beteiligten Hydroxylgruppen gemeint, die an trifunktionellen Polyolen gebunden sind. Werden zum Beispiel ausschließlich trifunktionelle Polyole mit Diisocyanat zu einem hydroxyl-funktionalisiertem Prepolymer umgesetzt, so liegt das kritische NCO/OH-Verhältnis bei 0,5. Wird dieses NCO/OH-Verhältnis überschritten, muss mit der Ausbildung vernetzter Strukturen, also mit einer Gelierung gerechnet werden, die zu nicht schmelzbaren Prepolymeren führt.

Um zu erreichen, dass das hydroxyl-funktionalisierte Polyurethan-Prepolymer bei Raumtemperatur fest ist, muss dafür gesorgt werden, dass entweder der kristalline Schmelzpunkt, die Glasübergangstemperatur oder gegebenenfalls beides oberhalb Raumtemperatur liegt. Dies ist über die Auswahl und Zusammenstellung der an der Bildungsreaktion zum hydroxyl-funktionalisierten Polyurethan-Hotmelt-Prepolymer beteiligten Polyole und Polyisocyanate auf vielerlei Art realisierbar. Beispielsweise können kristalline, bei Raumtemperatur feste, Polyole eingesetzt werden oder es kann ein hoher Anteil an kurzkettigen Polyolen verwendet werden, der nach Umsetzung mit dem Polyisocyanat zu einem hohen Anteil an Hartsegmenten innerhalb der Prepolymerstruktur führt. Vorteilhaft kann der Hotmelt-Charakter erzielt werden, indem der anzahlmäßige Anteil der am molekularen Aufbau des hydroxyl-funktionalisierten Polyurethan-Hotmelt-Prepolymers beteiligten Moleküle mit einer relativen Molmasse von kleiner oder gleich 1000 so bemessen wird, dass er mindestens 70%, bevorzugt mindestens 80 % beträgt. Der anzahlmäßige Anteil entspricht stets dem Stoffmengenanteil.

Im Hinblick auf die Verwendung des vernetzten Polyurethanfilms als Schicht in einem Klebeband oder in einem selbstklebenden Artikel hat sich gezeigt, dass besonders vorteilhafte viskoelastische Eigenschaften, die die Entwicklung maßgeschneiderter auf variable, sich ändernde Anforderungsprofile hin zugeschnittene Klebebandschichten ermöglichen, erreicht werden, wenn möglichst lange Prepolymerketten ausgebildet werden. Dies wird erreicht, indem das Verhältnis der Gesamtanzahl der Isocyanat-Gruppen zur Gesamtanzahl der Hydroxylgruppen der am molekularen Aufbau des verzweigten, thermoplastisch verarbeitbaren, hydroxyl-funktionalisierten Polyurethan-Hotmelt-Prepolymers beteiligten Ausgangsstoffe zwischen größer 0,90 und kleiner 0,98 eingestellt wird. Die gewichtsgemittelten, mittleren Molekulargewichte der erhaltenen Prepolymere liegen dann bei ca. 50000 bis 150000 g/mol. Dies ist ein Bereich, der einerseits eine problemlose Beschichtung als Hotmelt erlaubt, ohne dass für den praktischen Gebrauch störende, unterschiedliche Eigenschaften des erhaltenen Films in Längs- und Querrichtung erzeugt werden und andererseits die Einstellung vorteilhafter viskoelastischer Eigenschaften für Klebebandanwendungen ermöglicht.

Besonders vorteilhafte viskoelastische Eigenschaften werden weiterhin erzielt, wenn die an der Bildung des verzweigten, thermoplastisch verarbeitbaren, hydroxyl-funktionalisierten Polyurethan-Hotmelt-Prepolymers beteiligten Polyole zu einem Gewichtsanteil von größer 70 Gew.% Polyetherpolyole, bevorzugt Polypropylenglykole, sind.

Ein vorteilhafter Vernetzungsgrad des vernetzten Polyurethanfilms im Hinblick auf die Verwendung des vernetzten Polyurethanfilms als Schicht in einem Klebeband oder in einem selbstklebenden Artikel wird erreicht, wenn der anzahlmäßige Anteil der am molekularen Aufbau des verzweigten, thermoplastisch verarbeitbaren, hydroxyl-funktionalisierten Polyurethan-Hotmelt-Prepolymers beteiligten Moleküle mit einer Funktionalität von drei oder größer drei mindestens 0,5 %, bevorzugt mindestens 2,0 % beträgt.

Generell sind Polyurethan-Prepolymere in der Herstellung Stand der Technik und beispielsweise im "Kunststoff-Handbuch, Polyurethane, Hrsg: Guenter Oertel, 3.Auflage, 88-103, (1993)" beschrieben.

Ausgangsstoffe zur Herstellung des verzweigten, thermoplastisch verarbeitbaren, hydroxyl-funktionalisierten Polyurethan-Hotmelt-Prepolymers im Teilschritt A können alle bekannten Polyole wie zum Beispiel Polyetherpolyole, insbesondere Polyethylenglykole oder Polypropylenglykole, Polyesterpolyole, Polycarbonatpolyole, Polytetramethylenglykolether (Polytetrahydrofurane), hydrierte und nicht hydrierte hydroxyl-funktionalisierte Polybutadien-Derivate, hydrierte und nicht hydrierte hydroxyl-funktionalisierte Polyisoprene, hydroxyl-funktionalisierte Polyisobutylene, hydroxyl-funktionalisierte Polyolefine, hydrierte und nicht hydrierte hydroxyl-funktionalisierte Kohlenwasserstoffe sein. Bevorzugte Polyole sind Polypropylenglykole. Als Polypropylenglykole können alle handelsüblichen Polyether auf Basis von Propylenoxid und eines difunktionellen Starters im Falle der Diole und eines trifunktionellen Starters im Falle der Triole eingesetzt werden. Darunter fallen sowohl die konventionell, d.h. im Regelfall mit einem basischen Katalysator, wie z.B. Kaliumhydroxid, hergestellten Polypropylenglykole, als auch die besonders reinen Polypropylenglykole, die DMC (Double metal cyanide)-katalysiert hergestellt werden, und deren Herstellung z.B. in US 5,712,216, US 5,693,584, WO 99/56874, WO 99/51661, WO 99/59719, WO 99/64152, US 5,952,261, WO 99/64493 und WO 99/51657 beschrieben wird. Charakteristisch an den DMC-katalysierten Polypropylenglykolen ist, dass die "nominale" bzw. theoretische Funktionalität von exakt 2 im Falle der Diole bzw. exakt 3 im Falle der Triole auch tatsächlich annähernd erreicht wird. Bei den konventionell hergestellten Polypropylenglykolen ist die "wahre" Funktionalität stets etwas geringer als die theoretische, und zwar insbesondere bei Polypropylenglykolen mit höherem Molekulargewicht. Ursache ist eine Umlagerungs-Nebenreaktion des Propylenoxids zum Allylalkohol. Weiterhin können auch alle Polypropylenglykol-Diole bzw. -Triole eingesetzt werden, in denen Ethylenoxid mit einpolymerisiert ist, was in vielen handelsüblichen Polypropylenglykolen der Fall ist, um eine erhöhte Reaktivität gegenüber Isocyanaten zu erzielen.

Am Aufbau des Polyurethan-Hotmelt-Prepolymers können auch andere isocyanatreaktive Stoffe, wie zum

Beispiel Polyetheramine beteiligt sein.

Weitere Ausgangsstoffe können Kettenverlängerer wie zum Beispiel 1,2-Ethandiol, 1,2-Propandiol, 1,3-Propandiol, 2-Methyl-1,3-Propandiol, 1,4-Butandiol, 2,3-Butandiol, Propylenglykol, Dipropylenglykol, 1,4-Cyclohexandimethanol, Hydrochinondihydroxyethylether, Ethanolamin, N-Phenyldiethanolamin, oder m-Phenylendiamin sein. Kettenverlängerer sind niedermolekulare, gegenüber Isocyanaten reaktive difunktionelle Verbindungen. Ebenso können Vernetzer verwendet werden. Vernetzer sind niedermolekulare, gegenüber Isocyanaten reaktive Verbindungen mit einer Funktionalität größer als zwei. Beispiele für Vernetzer sind Glycerin, Trimethylolpropan, Diethanolamin, Triethanolamin und/oder 1,2,4-Butantriol.

Monofunktionelle, gegenüber Isocyanaten reaktive Stoffe, wie zum Beispiel Monoole können ebenfalls eingesetzt werden. Sie dienen als Kettenabbrecher und können somit zur Steuerung der Kettenlänge verwendet werden.

Im Teilschritt A) richtet sich die Auswahl des Polyisocyanats nach den gezielt einzustellenden Eigenschaften des Hotmelt-Prepolymers wie auch des späteren vernetzten Films. In Frage kommen zum Beispiel Isophorondüsocyanat, Hexamethylendiisocyanat, Dicyclohexylmethan-4,4'-diisocyanat, Toluylendiisocyanat, Diphenylmethan-4,4'-diisocyanat oder m-Tetramethyl-xylen-diisocyanat (TMXDI), Gemische der genannten Isocyanate oder chemisch daraus abgeleitete Isocyanate, zum Beispiel dimerisierte, trimerisierte oder polymerisierte Typen, die beispielsweise Harnstoff-, Uretdion- oder Isocyanuratgruppen enthalten. Ein Beispiel für eine dimerisierte Type ist das HDI-Uretdion Desmodur N 3400® der Firma Bayer. Ein Beispiel für eine trimerisierte Type ist das HDI-Isocyanurat Desmodur N 3300®, ebenfalls von Bayer. Bevorzugte Polyisocyanate sind aliphatische und cycloaliphatische Typen. Besonders bevorzugt ist Isophorondiisocyanat.

Um die Reaktion der Polyole mit dem PolyIsocyanat bzw. den Polyisocyanaten zu beschleunigen, können alle dem Fachmann bekannten Katalysatoren wie zum Beispiel tertiäre Amine, bismut- oder zinnorganische Verbindungen eingesetzt werden, um nur einige zu nennen. Die Konzentration der Katalysatoren wird auf die verwendeten Polyisocyanate und Polyole sowie auf die angestrebte Verweilzeit im Mischaggregat und die Temperatur im Mischaggregat abgestimmt. Vorteilhaft liegt sie zwischen 0,01 Gew.% und 0,5 Gew.% des herzustellenden chemisch vernetzten Polyurethanfilms.

In einer möglichen Ausführungsform enthält das Polyurethan-Hotmelt-Prepolymer aus Teilschritt A) weitere Rezeptierungsbestandteile wie zum Beispiel Füllstoffe, Harze, insbesondere klebrig machende Kohlenwasserstoffharze Alterungsschutzmittel (Antioxidantien), Lichtschutzmittel, UV-Absorber, rheologische Additive, sowie sonstige Hilfs- und Zusatzstoffe.

Als Füllstoffe können sowohl verstärkende, wie zum Beispiel Ruß, als auch nicht verstärkende, wie zum Beispiel Kreide oder Bariumsulfat, eingesetzt werden. Weitere Beispiele sind Talkum, Glimmer, pyrogene Kieselsäure, Silikate, Zinkoxid, Mikrovollglaskugeln, Mikrohohlglaskugeln und/oder Mikrokunststoffkugeln aller Art. Auch Mischungen der genannten Stoffe können eingesetzt werden.

Die Verwendung von Antioxidantien ist vorteilhaft, aber nicht zwingend notwendig.

Zu den geeigneten Antioxidantien zählen zum Beispiel sterisch gehinderte Phenole, Hydrochinon-Derivate, Amine, organische Schwefelverbindungen oder organische Phosphorverbindungen.

Lichtschutzmittel und UV-Absorber können optional ebenso eingesetzt werden.

Als Lichtschutzmittel finden zum Beispiel die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verwendung.

Beispiele für rheologische Additive sind pyrogene Kieselsäuren, Schichtsilikate (Bentonite), hochmolekulare Polyamidpulver oder Rizinusölderivat-Pulver.

Die zusätzliche Verwendung von Weichmachern ist ebenfalls möglich, sollte aber wegen ihrer starken Migrationstendenzen eher vermieden werden.

Die Herstellung des verzweigten, thermoplastisch verarbeitbaren, hydroxyl-funktionalisierten Polyurethan-Hotmelt-Prepolymers kann batchweise, zum Beispiel in einem beheizbaren Kneter, Planetenmischer oder Dissolver oder auch kontinuierlich, zum Beispiel in einem Extruder oder mit Hilfe einer Zweikomponenten- Misch- und Dosieranlage erfolgen. Die Herstellung des verzweigten, thermoplastisch verarbeitbaren, hydroxyl-funktionalisierten Polyurethan-Hotmelt-Prepolymers kann auch in Teilschritten erfolgen, wobei auch Kombinationen der Mischverfahren möglich sind. Um Blasenfreiheit zu erreichen, wird das Mischen unter vermindertem Druck bevorzugt.

Im Teilschritt B wird das im Teilschritt A hergestellte, thermoplastisch verarbeitbare, hydroxyl-funktionalisierte Polyurethan-Hotmelt-Prepolymer kontinuierlich in der Schmelze mit einem oder mehreren mindestens difunktionellen Polyisocyanaten in einem Mischaggregat gemischt und somit kontinuierlich chemisch umgesetzt. Kontinuierlich bedeutet, dass während des Mischens die zu mischenden Stoffe ständig und mit gleichmäßiger Geschwindigkeit dem Mischaggregat zugeführt, in dieses also eingebracht werden und die Mischung, in der die allmähliche chemische Umsetzung zum vernetzten Polymer voranschreitet, ständig und mit gleichmäßiger Geschwindigkeit das Mischaggregat an anderer Stelle verlässt. Im Mischaggregat findet somit während des Mischens ein ständiger, gleichmäßiger Fließvorgang, bzw. Transportvorgang statt. Die Verweildauer der Stoffe im Mischaggregat vom Einbringen bis zum Verlassen als chemisch

reagierendes Gemisch beträgt typischerweise 2 Sekunden bis 5 Minuten.
Die Funktionalität der Polyisocyanate und das Verhältnis der Gesamtanzahl der Isocyanat-Gruppen zur Gesamtanzahl der Hydroxyl- Gruppen der am molekularen Aufbau des somit durch die kontinuierlich fortschreitende chemische Umsetzung entstehenden Polymers werden so eingestellt, dass der Film nach vollständiger Umsetzung chemisch vernetzt und somit nicht mehr schmelzbar ist. Im Regelfall wird ein NCO/OH-Verhältnis zwischen 1,0 und 1,1 gewählt. Ein NCO/OH-Verhältnis von größer 1,0, also ein NCO-Überschuss führt bekanntermaßen über eine Reaktion mit der praktisch allgegenwärtigen Umgebungsfeuchtigkeit zu einem Polymerkettenaufbau bzw. zu einer Vernetzung. Ein NCO/OH-Verhältnis von kleiner 1,0 kann insbesondere dann gewählt werden, wenn tri- oder höherfunktionelle Polyisocyanate verwendet werden. Geeignete Polyisocyanate sind alle mindestens difunktionellen Polyisocyanate. In Frage kommende Polyisocyanate sind zum Beispiel alle Polyisocyanate, die bei der Beschreibung von Teilschritt A genannt wurden.

Das kontinuierliche Mischen des geschmolzenen, im Teilschritt A hergestellten, thermoplastisch verarbeitbaren, hydroxyl-funktionalisierten Polyurethan-Hotmelt-Prepolymers mit einem oder mehreren mindestens difunktionellen Polyisocyanaten erfolgt in einem kontinuierlich arbeitenden Mischaggregat, vorzugsweise in einem Extruder, insbesondere einem Doppelschnecken- oder einem Planetwalzenextruder, oder in einer beheizbaren Zweikomponenten-Misch- und Dosieranlage. Kaskadenschaltungen aus kontinuierlich oder auch diskontinuierlich arbeitenden Mischaggregaten sind ebenfalls geeignet. Das Mischaggregat ist erfindungsgemäß so konzipiert, dass bei einer kurzen Verweilzeit im Mischaggregat eine gute Durchmischung gewährleistet ist. Die Zugabe des geschmolzenen, im Teilschritt A hergestellten, thermoplastisch verarbeitbaren, hydroxyl-funktionalisierten Polyurethan-Hotmelt-Prepolymers und der mindestens difunktionellen Polyisocyanate können in einem Extruder an gleicher Stelle oder auch an unterschiedlichen Stellen erfolgen, vorzugsweise in druckfreien Zonen.

Günstig ist, wenn die mindestens difunktionellen Polyisocyanate fein verteilt dem thermoplastisch verarbeitbaren, hydroxyl-funktionalisierten Polyurethan-Hotmelt-Prepolymer zugesetzt werden, beispielsweise als Aerosol oder in feinen Tröpfchen.

In einer Zweikomponenten-Misch- und Dosieranlage wird das thermoplastisch verarbeitbare, hydroxyl-funktionalisierte Polyurethan-Hotmelt-Prepolymer beheizt und im geschmolzenen Zustand als Komponente A temperiert gefördert, während die mindestens difunktionellen Polyisocyanate als Komponente B gefördert werden. Die kontinuierliche Durchmischung erfolgt in einem dynamischen Mischkopf oder bevorzugt in einem Statik-Mischrohr oder einer Kombination aus dynamischem und statischem Mischverfahren.

Optional können in Teilschritt B während der kontinuierlichen Durchmischung des im Teilschritt A hergestellten, thermoplastisch verarbeitbaren, hydroxyl-funktionalisierten Polyurethan-Hotmelt-Prepolymers in der Schmelze mit einem oder mehreren mindestens difunktionellen Polyisocyanaten weitere Rezeptierungsbestandteile wie zum Beispiel Füllstoffe, Harze, insbesondere klebrig machende Kohlenwasserstoffharze Alterungsschutzmittel (Antioxidantien), Lichtschutzmittel, UV-Absorber, rheologische Additive, sowie sonstige Hilfs- und Zusatzstoffe zugemischt werden.

Während und nach der kontinuierlichen Durchmischung des thermoplastisch verarbeitbaren, hydroxyl-funktionalisierten Polyurethan-Hotmelt-Prepolymers in der Schmelze mit einem oder mehreren mindestens difunktionellen Polyisocyanaten schreitet die chemische Umsetzung zum vernetzten Polyurethan kontinuierlich voran. Die Reaktionsgeschwindigkeit ist unkatalysiert oder bei maßvoller Katalyse mit einem geeigneten Katalysator ausreichend langsam, so dass eine thermoplastische Verarbeitung noch eine Zeit lang möglich ist. Während dieser Zeit, die im Regelfall im Minutenbereich liegt, muss das kontinuierliche Ausformen der warmen oder heißen, chemisch reagierenden Mischung zu einem Film gemäß Teilschritt C erfolgen. Nach dem Ausformen lässt man den Film auf Raumtemperatur abkühlen, wodurch er sich sofort, unabhängig vom Fortschritt der chemischen Vernetzungsreaktion verfestigt. Die Vernetzungsreaktion schreitet auch bei Raumtemperatur bis zum Erreichen der Vollständigkeit weiter voran. Die chemische Vernetzungsreaktion ist bei Raumtemperatur im Regelfall nach ein bis zwei Wochen vollständig abgeschlossen. Nach vollständiger Umsetzung ist das entstandene Polymer so vernetzt, dass es nicht mehr schmelzbar ist.

Das kontinuierliche Ausformen der warmen oder heißen, chemisch reagierenden Mischung unmittelbar im Anschluss an den kontinuierlichen Mischprozess des Teilschritts B) während der kontinuierlich fortschreitenden chemischen Umsetzungsphase in der Schmelze zu einem bei Abkühlung auf Raumtemperatur sofort festen und aufwickelbaren Film gemäß Teilschritt C) erfolgt bevorzugt mittels eines Walzenauftrags oder einer Extrusionsdüse, kann aber auch mit anderen Auftragsverfahren, wie zum Beispiel einem Kommarakel erfolgen. Der ausgeformte Film wird kontinuierlich auf ein zulaufendes, bahnförmiges Trägermaterial aufgetragen und anschließend aufgewickelt. Das zulaufende, bahnförmige Trägermaterial kann zum Beispiel eine antiadhäsiv ausgerüstete Folie oder ein antiadhäsiv ausgerüstetes Papier sein. Es kann sich aber auch um ein mit einem Haftklebstoff oder einer Funktionsschicht vorbeschichtetes Material oder um einen Träger oder um beliebige Kombinationen der genannten bahnförmigen Materialien handeln.

Überraschend und auch für den Fachmann nicht vorhersehbar wird gefunden, dass das erfindungsgemäße Verfahren es ermöglicht, in einem Hotmelt-Beschichtungsprozess ein chemisch vernetztes, aber dennoch in einem für Haftklebeanwendungen geeigneten Maße fließfähiges Polymer bei relativ niedrigen Beschichtungstemperaturen herzustellen. In einem für Haftklebeanwendungen geeigneten Maße fließfähig bedeutet, dass eine Spannung, die zur Erzielung einer mechanischen Verformung des Polymers, zum Beispiel einer Längsdehnung, notwendig ist, beim Aufrechthalten dieser Verformung über die Zeit abnimmt und asymptotisch gegen einen Grenzwert läuft.

Da das Prepolymer insbesondere bereits Verzweigungen enthält und zudem eine relativ hohe Molmasse besitzt - andernfalls wäre es bei Raumtemperatur nicht fest - musste der Fachmann zudem damit rechnen, dass nach Zudosierung des Polyisocyanats zu diesem Prepolymer in der Schmelze, also bei Temperaturen deutlich oberhalb Raumtemperatur, sofortige Gelierung einsetzt, sich also sofort vernetzte Strukturen ausbilden, die eine weitere Durchmischung und anschließende Beschichtung und Ausformung zum Film unmöglich machen. Dass dies nicht eintritt, war für den Fachmann nicht vorhersehbar.

Da durch die Hotmelt-Beschichtung die Aufwickelfähigkeit des Films nicht an einen Reaktionsfortschritt oder die Abdampfgeschwindigkeit eines Lösungsmittels gekoppelt ist, sondern nur an die Schnelligkeit der Abkühlung des Films gebunden ist, können sehr hohe Beschichtungsgeschwindigkeiten erzielt werden, was einen wirtschaftlichen Vorteil darstellt. Es entfallen außerdem die Kosten für die Beheizung einer Wärmekanalstrecke sowie die Kosten für eine Lösemittelverbrennung oder eine Lösemittelrückgewinnung. Da in dem erfindungsgemäßen Verfahren auch das Prepolymer lösemittelfrei hergestellt werden kann, entstehen auch dort keine Kosten für eine Lösemittelverbrennung oder - rückgewinnung.

Durch die Lösemittelfreiheit des erfindungsgemäßen Verfahrens können im Prinzip beliebig dicke Polymerfilme hergestellt werden, ohne dass es zur Blasen- oder Schaumbildung durch abdampfendes Lösungsmittel kommt.

Da das kontinuierliche Zumischen der die chemische Vernetzung herbeiführenden Polyisocyanate beziehungsweise des Polyisocyanats zum verzweigten, thermoplastisch verarbeitbaren, hydroxyl-funktionalisierten Polyurethan-Hotmelt-Prepolymers erst kurz vor dem Ausformen der Mischung zum Film erfolgt, ist keine Blockierung reaktiver Gruppen notwendig. Somit werden auch zu keinem Zeitpunkt im Film verbleibende und eventuell in der späteren Anwendung störende Blockierungsmittel freigesetzt.

Da die Vernetzung nicht von außen durch Strahlung wie zum Beispiel UV- oder ESH-Strahlung initiiert wird, wird ein Polymeraufbau mit durchgehend homogenen Eigenschaften auch dann erreicht, wenn der hergestellte Film sehr dick ist oder wenn der Film größere Mengen an Füllstoffen enthält. Füllstoffe sind in größeren Mengen von zum Beispiel 50 % und mehr sowohl im Teilschritt A) als auch im Teilschritt B) einarbeitbar.

Dadurch, dass ein thermoplastisch verarbeitbares hydroxyl-funktionalisiertes Polyurethan-Hotmelt-Prepolymer in aller Regel ein verglichen mit vielen anderen thermoplastisch verarbeitbaren Polymeren geringes gewichtsgemitteltes mittleres Molekulargewicht hat, ist es bei vergleichsweise niedrigen Temperaturen schmelzbar und thermoplastisch verarbeitbar. Während und nach dem Ausformen der Schmelze zu einem Film kommt es in aller Regel nicht zu klebtechnisch relevanten Unterschieden des Films in Längs- und Querrichtung.

Überraschend und auch für den Fachmann nicht vorhersehbar wird durch die Verzweigung des Hotmelt-Prepolymers die Erzeugung vernetzter Polymerstrukturen mit gleichzeitig fließfähigen Anteilen ermöglicht. Derartige Polymerstrukturen führen zu viskoelastischen Eigenschaften, wie sie im Klebebandbereich zur Erzielung hoher Klebkräfte bei gleichzeitig hohen Scherfestigkeiten benötigt werden. Ein gewisses Maß an viskosem Fließen ist bekanntlich zum Aufbau von Haftung (Adhäsion) an zu verklebenden Substraten stets notwendig. Ebenso ist ein gewisses Maß an elastischen Rückstellkräften (Kohäsion) notwendig, um Scherbeanspruchungen, insbesondere in der Wärme, widerstehen zu können. Vorteilhafte Haftklebeeigenschaften können nicht nur dann erzielt werden, wenn die Haftklebstoffschicht entsprechend viskoelastisch konzipiert ist, sondern auch, wenn dies für die anderen Schichten eines Klebebandes, wie zum Beispiel die Trägerschicht oder eine Primerschicht zutrifft. Unverzweigte Hotmelt-Prepolymere führen dagegen nach einer Vernetzung entweder zu Polymerstrukturen mit besonders elastischem Charakter ohne nennenswerte fließfähige Anteile oder aber zu Polymerstrukturen mit sehr hohen fließfähigen Anteilen und sehr geringen elastischen Anteilen. Ein für Haftklebeanwendungen geeignetes Maß wäre so nur unzureichend zu treffen. Polymere mit einem zu hohen elastischen Charakter fließen nur in sehr geringem Maße auf Substrate auf, entwickeln also nur geringe Adhäsionskräfte. Werden unverzweigte Hotmelt-Prepolymere wiederum nur geringfügig oder gar nicht vernetzt, haben sie also einen zu geringen elastischen Charakter, resultieren sehr geringe Kohäsionskräfte.

Ein nach dem erfindungsgemäßen Verfahren hergestelltes verzweigtes Hotmelt-Prepolymer kann auch mit lediglich difunktionellen Isocyanaten vorteilhaft vernetzt werden.

Ein weiterer Vorteil des erfindungsgemäßen Verfahrens besteht darin, den Film während der Vernetzungsphase reaktiv an andere Schichten eines Klebebandes chemisch anzubinden. Dies ist möglich, weil während des Ausformens der Mischung im Teilschritt C) und eine gewisse Zeit danach während der kontinuierlich fortschreitenden Umsetzung noch reaktive NCO-Gruppen an der Filmoberfläche zu finden sind.

Anhand der folgenden Beispiele soll die Erfindung näher beschrieben werden, ohne die Erfindung damit einschränken zu wollen.

Die folgenden Prüfmethoden wurden eingesetzt, um die nach dem beschriebenen Verfahren hergestellten Muster kurz zu charakterisieren:

Gelpermeationschromatografie (GPC)

Zur Charakterisierung der verzweigten, thermoplastisch verarbeitbaren, hydroxyl-funktionalisierten Polyurethan-Hotmelt-Prepolymere aus Teilschritt A) erfolgten Bestimmungen des zahlengemittelten und des gewichtsgemittelten mittleren Molekulargewichts mittels Gelpermeationschromatografie (GPC). Die Messungen wurden bei der Firma Polymer Standards Service in Mainz ausgeführt.
Die Kalibrierung erfolgte mit Poly(methyl-methacrylat) universell. Die Bestimmungen erfolgten nach der Analysenmethode AM 1005. Als Eluent wurde THF / 0,1 Vol.% Trifluoressigsäure (TFAc) verwendet. Als Vorsäule wurde PSS-SDV, 10μm, ID 8.0 mm x 50 mm eingesetzt und als Säule PSS-SDV, 10μm linear one, ID 8.0 mm x 300 mm. Gepumpt wurde mit einer TSP P 100. Der Fluss betrug 0,5 ml/min. Die Probenkonzentration betrug ca. 1,5 g/l. Beim Injektionssystem handelte es sich um ein TSP AS 3000. Das Injektionsvolumen betrug 100 μl. Gemessen wurde bei 23°C. Beim Detektor handelte es sich um einen Shodex RI 71. Die Auswertung erfolgte mit dem Programm PSS-WinGPC Unity Version 7.20.

Dynamisch Mechanische Analyse (DMA) zur Bestimmung der komplexen Viskosität (n*)

Zur Charakterisierung der verzweigten, thermoplastisch verarbeitbaren, hydroxyl-funktionalisierten Polyurethan-Hotmelt-Prepolymere aus Teilschritt A) erfolgten weiterhin Bestimmungen der komplexen Viskosität mittels Dynamisch Mechanischer Analyse (DMA).

Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Die komplexe Viskosität wurde im Temperatursweep bei einer Oszillationsfrequenz von 10 rad/s bestimmt. Die komplexe Viskosität $\eta^*$ ist folgendermaßen definiert: $\eta^* = G^* / \omega$
($G^*$ = komplexer Schubmodul, $\omega$ = Winkelfrequenz).

Die weiteren Definitionen lauten: $G^* = \sqrt{(G')^2 + (G'')^2}$ (G" = Viskositätsmodul (Verlustmodul), G' = Elastizitätsmodul (Speichermodul)).

$G'' = \tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

$G' = \tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).

$$\omega = 2\pi \cdot f \text{ (f = Frequenz).}$$

Die Dicke der gemessenen Proben betrug stets 1 mm. Der Probendurchmesser betrug jeweils 25 mm. Die Vorspannung erfolgte mit einer Belastung von 3N. Der Stress der Probenkörper betrug bei allen Messungen 2500 Pa.

Bestimmung der Zuaeiaenschaften im Zugdehnungsversuch

Die aus Teilschritt C) erhaltenen chemisch vernetzten Polyurethanfilme wurden nach einer Lagerzeit von zwei Wochen bei Raumtemperatur in Längsrichtung (Ausformungsrichtung) und in Querrichtung (Richtung in einem Winkel von 90° zur Ausformungsrichtung in der Filmebene) hinsichtlich ihrer Zugdehnungseigenschaften untersucht.
Die Messungen erfolgten gemäß DIN EN ISO 527-1 bis 3 mit den Normprüfkörpern der Größe 5A bei einer Prüfgeschwindigkeit von 300 mm/min. Gemessen wurden die Zugfestigkeit und die zugehörige Dehnung. Die Zugfestigkeit ist die maximal gemessene Kraft beim Dehnen des Prüfmaterials, dividiert durch die Anfangsquerschnittsfläche der Probe und wird in der Einheit $N/mm^2$ angegeben. Die Dehnung bei der Zugfestigkeit ist die auf die ursprüngliche Messlänge des Prüfstreifens bezogene Längenänderung bei maximaler gemessener Kraft und wird in der Einheit % angegeben.

Bestimmung des Relaxationsverhaltens

Die aus Teilschritt C) erhaltenen chemisch vernetzten Polyurethanfilme wurden nach einer Lagerzeit von zwei Wochen bei Raumtemperatur in Längsrichtung (Ausformungsrichtung) und in Querrichtung (Richtung in einem Winkel von 90° zur Ausformungsrichtung in der Filmebene) hinsichtlich ihres Relaxationsverhaltens untersucht. Die Untersuchungen des Relaxationsverhaltens erfolgten ebenfalls im Zugdehnungsversuch in Anlehnung an DIN EN ISO 527-1 bis 3 mit Normprüfkörpern der Größe 5A. Bei einer Prüfgeschwindigkeit von 100 mm/min wurde das Prüfmaterial 50% in Längsrichtung, bezogen auf die ursprüngliche Länge des Prüfstreifens, gedehnt. Die zugehörige Spannung wurde im Augenblick des Erreichens der Dehnung von 50% gemessen. Die Spannung ist definiert als die Zugkraft am Probekörper, bezogen auf die Anfangsquerschnittsfläche innerhalb der Messlänge. Die Dehnung von 50% wurde weiter auf recht erhalten. Nach einer Zeit von fünf Minuten wurde die Spannung erneut bestimmt. Die prozentuale Abnahme der Spannung ist die Relaxation:

$$\text{Relaxation} = 100 \cdot (\text{Anfangsspannung} - \text{Endspannung}) / \text{Anfangsspannung}.$$

Klebkraft

Die Klebkraft wurde nach PSTC-101 bestimmt. Nach dieser Methode wird der zu messende Klebstreifen auf den Haftgrund (Stahl) aufgebracht, zweimal mit einem 2kg-Gewicht aufgedrückt und anschließend unter definierten Bedingungen mittels einer Zugprüfmaschine abgezogen. Der Abzugswinkel betrug jeweils 90°, die Abzugsgeschwindigkeit 300 mm/min. Die zum Abziehen erforderliche Kraft ist die Klebkraft, welche in der Einheit N/cm angegeben wird. Die gemessenen Klebstreifen waren mit einer 25 µm dicken Polyesterfolie rückseitenverstärkt.

Schertest

Der Schertest erfolgte nach der Prüfvorschrift PSTC-107. Nach dieser Methode wurde der zu messende Klebstreifen auf den Haftgrund (Stahl) aufgebracht, viermal mit einem 2kg-Gewicht aufgedrückt und anschließend einer konstanten Scherbelastung ausgesetzt. Ermittelt wird die Haltedauer in Minuten.
Die Verklebungsfläche betrug jeweils 13 x 20 mm. Die Scherbelastung dieser Verklebungsfläche betrug 1 kg. Die Messung erfolgte sowohl bei Raumtemperatur (23°C) als auch bei 70°C. Die gemessenen Klebstreifen waren mit einer 25 µm dicken Polyesterfolie rückseitenverstärkt.

Die verzweigten, thermoplastisch verarbeitbaren, hydroxyl- funktionalisierten Polyurethan-Hotmelt-Prepolymere gemäß Teilschritt A) wurden in einem üblichen beheizund evakuierbaren Mischkessel mit Dissolver-Rührwerk der Firma Molteni gefertigt. Während des jeweils ca. zweistündigen Mischvorgangs wurde die Temperatur der Mischung auf ca. 70°C bis 100 °C eingestellt und zur Entgasung der Komponenten wurde Vakuum angelegt.

Das kontinuierliche chemische Umsetzen der verzweigten, thermoplastisch verarbeitbaren, hydroxyl-funktionalisierten Polyurethan-Hotmelt-Prepolymere durch kontinuierliches Mischen in der Schmelze mit einem oder mehreren mindestens difunktionellen Polyisocyanaten erfolgte bei einem Teil der Versuche in einer beheizbaren Zweikomponenten-Misch- und Dosieranlage mit einem beheizbaren Statik-Mischrohr und Zahnraddosierpumpen mit einer Förderleistung von max. ca. 2 l/min. und bei einem anderen Teil der Versuche in einem Doppelschneckenextruder der Firma Leistritz, Deutschland, Bez LSM 30/34. Das Aggregat wurde von außen auf ca. 70°C bis 90°C elektrisch beheizt und über verschiedene Gebläse luftgekühlt und war so konzipiert, dass eine gute Durchmischung von Prepolymer und Polyisocyanat bei kurzer Verweilzeit im Extruder gewährleistet war. Dazu wurden die Mischwellen des Doppelschneckenextruders so angeordnet, dass sich fördernde und mischende Elemente abwechselten. Die Zugabe des jeweiligen Polyisocyanats erfolgte mit geeignetem Dosierequipment unter Verwendung von Dosierhilfsmitteln in die druckfreien Förderzonen des Doppelschneckenextruders.

Nach Austritt der chemisch reagierenden, ca. 80°C heißen Mischung des Teilschritts B) aus dem Doppelschneckenextruder (Austritt: Runddüse 5mm Durchmesser) erfolgte die Ausformung zum Film gemäß Teilschritt C) direkt mittels eines nachgeschalteten Zweiwalzenauftragswerks zwischen zwei zulaufenden, beidseitig silikonisierten 50 µm dicken Polyesterfolien. Bei einem Teil der Versuche waren die zulaufenden, beidseitig silikonisierten 50 µm dicken Polyesterfolien mit dem Polyacrylathaftklebstoff Durotac 280-1753 der Firma National Starch in einer Dicke von 50 µm vorbeschichtet. Die chemisch reagierende, ca. 80°C heißen Mischung wurde bei diesen Versuchen somit zwischen den Polyacrylathaftklebstoffen mit direktem Kontakt zu diesen beschichtet. Die Zulaufgeschwindigkeit wurde zwischen 1 m/min und 20 m/min variiert. Eine der zulaufenden, beidseitig silikonisierten Polyesterfolien wurde nach Abkühlung des Films und damit Verfestigung sofort wieder ausgedeckt. Somit lag nun ein aufwickelbarer Film vor.

Ein Teil der auf sililkonisierter Polyesterfolie ohne Haftklebstoff-Vorbeschichtung vorliegenden aufgewickelten

Filme wurde nach zwei Wochen Lagerzeit bei Raumtemperatur wieder abgewickelt und gegen den auf silikonisierter Polyesterfolie in einer Dicke von 50 μm fertig ausgestrichen vorliegenden Polyacrylat-Haftklebstoff Durotac 280-1753 der Firma National Starch kaschiert. Die Kaschierung erfolgte ohne irgendeine Vorbehandlung. Die Versuche mit dem Polyacrylat-Haftklebstoff dienten der Erprobung der Verwendung als Träger- oder als Funktionsschicht in einem Klebeband.

In Tabelle 1 sind die zur Herstellung des chemisch vernetzten Polyurethan-Films verwendeten Basismaterialien aufgeführt, und zwar jeweils mit Handelsnamen und Hersteller. Die genannten Rohstoffe sind alle frei im Handel erhältlich.

Tabelle 1: Zur Herstellung der chemisch vernetzten Polyurethan-Filme eingesetzte Basismaterialien

| Handelsname | Chemische Basis | mittleres zahlengemitteltes Molekulargewicht $M_n$ (g/mol) | OH- bzw NCO-Zahl (mmol OH/kg bzw. mmol NCO/kg | Hersteller / Lieferant |
|---|---|---|---|---|
| Voranol P 400 ® | Polypropylenglykol, Diol | 400 | 4643 | Dow |
| Voranol 2000L ® | Polypropylenglykol, Diol | 2000 | 989 | Dow |
| Voranol CP 6055 ® | Polypropylenglykol, Triol | 6000 | 491 | Dow |
| MPDiol ® | 2-Methyl-1,3-propandiol | 90,12 | 22193 | Lyondell |
| Lutensol A07 ® | ethoxylierter $C_{13}C_{15}$ - Oxoalkohol | 520 | 1961 | BASF |
| Vestanat IPDI ® | Isophorondiisocyanat | 222,3 | 8998 | Degussa |
| Desmodur N 3300 ® | aliphatisches Polyisocyanat auf Basis Hexamethylendiisocyanat | ca. 579 | 5190 | Bayer |
| Tinuvin 292 ® | sterisch gehindert. Amin, Licht- und Alterungsschutzmittel | | | Ciba |
| Tinuvin 400 ® | Triazin-Derivat, UV-Schutzmittel | | | Ciba |
| Coscat 83 ® Aerosil R 202 ® Omyacarb 4BG ® | Bismuttrisneodecanoat CAS-Nr. 34364-26-6 Pyrogene Kieselsäure, hydrophobiert Gemahlene Kreide | | | Caschem Evonik Omya |

Beispiele

**Beispiel 1**

Zur Herstellung eines chemisch vernetzten Polyurethanfilms wurde das Verfahren in der folgenden Weise eingesetzt:

Teilschritt A)

Das verzweigte, thermoplastisch verarbeitbare, hydroxyl-funktionalisierte Polyurethan-Hotmelt-Prepolymer wurde durch homogenes Mischen und somit Umsetzen der folgenden Ausgangsstoffe in den angegebenen Mengenverhältnissen hergestellt:

Tabelle 2: Zusammensetzung des verzweigten, thermoplastisch verarbeitbaren, hydroxyl-funktionalisierten Polyurethan-Hotmelt-Prepolymers aus Beispiel 1

| Ausgangsstoff | Gewichtsanteil (Gew.%) | Anzahl der OH- beziehungsweise NCO-Gruppen, bezogen auf den prozentualen Gewichtsanteil | Prozentuales Verhältnis der Anzahl der OH- beziehungsweise NCO-Gruppen zueinander | Prozentuales Verhältnis der Anzahl der OH- beziehungsweise NCO-Gruppen tragenden Moleküle zueinander (idealisiert)* |
|---|---|---|---|---|
| Voranol P 400 | 17,23 | 80,00 mmol OH | 21,82 | 22,31 |
| Voranol CP 6055 | 48,88 | 24,00 mmol OH | 6,54 | 4,46 |
| MP Diol | 3,60 | 80,00 mmol OH | 21,82 | 22,31 |
| Voranol 2000L | 8,09 | 8,00 mmol OH | 2,18 | 2,23 |
| Tinuvin 400 | 0,21 | | | |
| Tinuvin 292 | 0,10 | | | |
| Coscat 83 | 0,41 | | | |
| Aerosil R 202 | 2,06 | | | |
| Vestanat IPDI | 19,42 | 174,72 mmol NCO | 47,64 | 48,70 |
| Summe | 100,00 | 366,72 | 100,00 | 100.00 |
| *errechnet aus dem prozentualen Verhältnis der Anzahl der OH-Gruppen zueinander unter der stark idealisierten Annahme, dass das Voranol P400, das MP Diol und das Voranol 2000L exakt die Funktionalität 2 haben und das Voranol CP 6055 exakt die Funktionalität 3 hat. | | | | |

Zunächst wurden alle aufgeführten Ausgangsstoffe außer dem MP Diol und dem Vestanat IPDI bei einer Temperatur von 70°C und einem Druck von 100 mbar 1,5 Stunden gemischt. Sodann wurde das MP Diol 15 Minuten lang zugemischt und anschließend das Vestanat IPDI, ebenfalls während einer Dauer von 15 Minuten. Durch die entstandene Reaktionswärme erwärmte sich die Mischung auf 100°C und wurde nun zu einem Teil in Vorratsbehälter abgefüllt. Ein anderer Teil wurde direkt in Teilschritt B) weiter verarbeitet.

Das NCO/OH-Verhältnis betrug 0,91. Der theoretische Gelpunkt errechnet sich zu 0,89. Trotz des Überschreitens des theoretischen Gelpunktes war das durch die Umsetzung entstandene verzweigte, hydroxyl-funktionalisierte Polyurethan-Hotmelt-Prepolymer schmelzbar und somit thermoplastisch verarbeitbar. Als Grund wird angenommen, dass einige der eingesetzten Polyole auch monofunktionelle Anteile besitzen. 4,46 % der am molekularen Aufbau des verzweigten, thermoplastisch verarbeitbaren, hydroxyl-funktionalisierten Polyurethan-Hotmelt-Prepolymers beteiligten Moleküle waren trifunktionell (idealisierte Betrachtung) und somit befähigt zur Bildung verzweigter Strukturen. 93,32 % der am molekularen Aufbau des verzweigten, thermoplastisch verarbeitbaren, hydroxyl-funktionalisierten Polyurethan-Hotmelt-Prepolymers beteiligten Moleküle hatten eine relative Molmasse von kleiner oder gleich 1000 (bei idealisierter Betrachtung).

Das entstandene Prepolymer war bei Raumtemperatur fest. Die komplexe Viskosität $\eta^*$ betrug bei Raumtemperatur (23°C) 22000 Pas und bei 70 °C 5500 Pas.
Das gewichtsgemittelte mittlere Molekulargewicht $M_W$ betrug 125000 g/mol, das zahlengemittelte mittlere Molekulargewicht $M_N$ 17800 g/mol.

Teilschritt B)

Das verzweigte, thermoplastisch verarbeitbare, hydroxyl-funktionalisierte Polyurethan-Hotmelt-Prepolymer aus Teilschritt A) wurde einem auf 80°C vorgeheizten Doppelschneckenextruder kontinuierlich zugeführt. Das Polyisocyanat wurde gleichzeitig und an gleicher Stelle dem Doppelschneckenextruder in Form feiner Tröpfchen kontinuierlich zudosiert. Als zudosiertes Polyisocyanat fand bei einem Teil der Versuche Vestanat IPDI Verwendung, bei einem anderen Teil Desmodur N3300.
In beiden Versuchen wurde ein NCO/OH-Verhältnis von 1,05 eingestellt.
Somit betrugen die Mischungsverhältnisse:

100 Gewichtsteile Prepolymer : 2,99 Gewichtsteile Vestanat IPDI bzw.
100 Gewichtsteile Prepolymer : 5,18 Gewichtsteile Desmodur N 3300.

In beiden Versuchen wurde kontinuierlich gemischt und gefördert. Die Zeit bis zum Austritt des Extrudats aus dem Extruder betrug ca, zwei Minuten.

Teilschritt C)

Das Extrudat wurde direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug 1,0 mm. Der Film wurde nach Abkühlung auf Raumtemperatur aufgewickelt, nachdem zuvor eine der beiden silikonisierten Polyesterfolien entfernt wurde. In einem ergänzenden Versuch erfolgte die Beschichtung zwischen zwei zulaufenden, beidseitig silikonisierten, mit dem Polyacrylathaftklebstoff Durotac 280-1753 der Firma National Starch in einer Dicke von 50 µm vorbeschichteten Polyesterfolien.
Auch hier betrug die Dicke des Films 1,0 mm und der Film wurde ebenfalls nach Abkühlung auf Raumtemperatur aufgewickelt, nachdem zuvor eine der beiden silikonisierten Polyesterfolien entfernt wurde. Die aufgewickelten Filme wurden zwei Wochen bei Raumtemperatur gelagert und anschließend geprüft.

Die Prüfergebnisse sind in der folgenden Tabelle 3 zusammengefasst:

| | Umsetzung des Prepolymers mit Vestanat IPDI | | Umsetzung des Prepolymers mit Desmodur N 3300 | |
|---|---|---|---|---|
| | Film ohne Polyacrylat-Haftklebstoff | Film mit Durotac280-1753 | Film ohne Polyacrylat-Haftklebstoff | Film mit Durotac280-1753 |
| Zugfestigkeitlängs ($N/mm^2$) | 0,3 | n.b. | 2,3 | n.b. |
| Zugfestigkeit quer ($N/mm^2$) | 0,3 | n.b. | 2,4 | n.b. |
| Dehnung längs (%) | 420 | n.b. | 480 | n.b. |
| Dehnung quer (%) | 410 | n.b. | 490 | n.b. |
| Relaxation längs (%) | 55 | n.b. | 46 | n.b. |
| Relaxation quer (%) | 54 | n.b. | 48 | n.b. |
| Klebkraft , Stahl, 90°-Winkel, 300 mm/min (N/cm) | 3,5 | 8,4 | 2,6 | 7,6 |
| Haltezeit im Schertest bei Raumtemperatur (min) | 2500 | > 10000 | 2000 | > 10000 |
| Haltezeit im Schertest bei 70°C (min) | 200 | > 10000 | 250 | > 10000 |
| Schmelzbarkeit (geprüft bis 200 °C) | nicht schmelzbar | nicht schmelzbar | nicht schmelzbar | nicht schmelzbar |

Die Klebkraft des Haftklebstoffs Durotac280-1753, aufgetragen auf eine 25 µm dicke Polyesterfolie, betrug zum Vergleich 5,9 N/cm.

**Beispiel 2**

Zur Herstellung eines chemisch vernetzten Polyurethanfilms wurde das Verfahren in der folgenden Weise eingesetzt:

Teilschritt A)

Das verzweigte, thermoplastisch verarbeitbare, hydroxyl-funktionalisierte Polyurethan-Hotmelt-Prepolymer enthielt diesmal zusätzlich einen Kettenabbrecher und wurde durch homogenes Mischen und somit Umsetzen der folgenden Ausgangsstoffe in den angegebenen Mengenverhältnissen hergestellt:

Tabelle 4: Zusammensetzung des verzweigten, thermoplastisch verarbeitbaren, hydroxyl-funktionalisierten Polyurethan-Hotmelt-Prepolymers aus Beispiel 2

| Ausgangsstoff | Gewichtsanteil (Gew.%) | Anzahl der OH- beziehungsweise NCO-Gruppen, bezogen auf den prozentualen Gewichtsanteil | Prozentuales Verhältnis der Anzahl der OH- beziehungsweise NCO-Gruppen zueinander | Prozentuales VerhältnisderAnzahl der OH- beziehungsweise NCO-Gruppen tragenden Moleküle zueinander (idealisiert)* |
|---|---|---|---|---|
| Voranol P 400 | 16,69 | 77,48 mmol OH | 21,21 | 21,39 |
| Voranol CP 6055 | 47,34 | 23,25 mmol OH | 6,37 | 4,27 |
| MP Diol | 3,49 | 77,40 mmol OH | 21,19 | 21,37 |
| Voranol 2000L | 7,84 | 7,75 mmol OH | 2,12 | 2,14 |
| Lutensol AO7 ® | 2,47 | 4,84 mmol OH | 1,33 | 2,68 |
| Tinuvin 400 | 0,21 | | | |
| Tinuvin 292 | 0,10 | | | |
| Coscat 83 | 0,41 | | | |
| Aerosil R 202 | 2,06 | | | |
| Vestanat IPDI | 19,40 | 174,52 mmol NCO | 47,78 | 48,15 |
| Summe | 100,00 | 365,24 | 100,00 | 100.00 |
| *errechnet aus dem prozentualen Verhältnis der Anzahl der OH-Gruppen zueinander unter der stark idealisierten Annahme, dass das Voranol P400, das MP Diol und das Voranol 2000L exakt die Funktionalität 2 haben, das Voranol CP 6055 exakt die Funktionalität 3 und das Lutensol AO7 exakt die Funktionalität 1 hat. | | | | |

Zunächst wurden alle aufgeführten Ausgangsstoffe außer dem MP Diol und dem Vestanat IPDI bei einer Temperatur von 70°C und einem Druck von 100 mbar 1,5 Stunden gemischt. Sodann wurde das MP Diol 15 Minuten lang zugemischt und anschließend das Vestanat IPDI, ebenfalls während einer Dauer von 15 Minuten. Durch die entstandene Reaktionswärme erwärmte sich die Mischung auf 100°C und wurde nun zu einem Teil in Vorratsbehälter abgefüllt. Ein anderer Teil wurde direkt in Teilschritt B) weiter verarbeitet.

Das NCO/OH-Verhältnis betrug 0,92. Der theoretische Gelpunkt ist abgeschätzt etwas größer als 0,89. Das durch die Umsetzung entstandene verzweigte, hydroxylfunktionalisierte Polyurethan-Hotmelt-Prepolymer war schmelzbar und somit thermoplastisch verarbeitbar. 4,27 % der am molekularen Aufbau des verzweigten, thermoplastisch verarbeitbaren, hydroxyl-funktionalisierten Polyurethan-Hotmelt-Prepolymers beteiligten Moleküle waren trifunktionell (idealisierte Betrachtung) und somit befähigt zur Bildung verzweigter Strukturen. 93,59 % der am molekularen Aufbau des verzweigten, thermoplastisch verarbeitbaren, hydroxyl-funktionalisierten Polyurethan-Hotmelt-Prepolymers beteiligten Moleküle hatten eine relative Molmasse von kleiner oder gleich 1000 (bei idealisierter Betrachtung).

Das entstandene Prepolymer war bei Raumtemperatur fest. Die komplexe Viskosität $\eta^*$ betrug bei Raumtemperatur (23°C) 20000 Pas und bei 70 °C 4800 Pas.
Das gewichtsgemittelte mittlere Molekulargewicht $M_W$ betrug 115000 g/mol, das zahlengemittelte mittlere Molekulargewicht $M_N$ 16400 g/mol.

Teilschritt B)

Das verzweigte, thermoplastisch verarbeitbare, hydroxyl-funktionalisierte Polyurethan-Hotmelt-Prepolymer

aus Teilschritt A) wurde einem auf 80°C vorgeheizten Doppelschneckenextruder kontinuierlich zugeführt. Das Polyisocyanat wurde gleichzeitig und an gleicher Stelle dem Doppelschneckenextruder in Form feiner Tröpfchen kontinuierlich zudosiert. Als zudosiertes Polyisocyanat fand bei einem Teil der Versuche Vestanat IPDI Verwendung, bei einem anderen Teil Desmodur N3300.
In beiden Versuchen wurde ein NCO/OH-Verhältnis von 1,05 eingestellt.
Somit betrugen die Mischungsverhältnisse:
100 Gewichtsteile Prepolymer : 2,88 Gewichtsteile Vestanat IPDI bzw.
100 Gewichtsteile Prepolymer : 4,99 Gewichtsteile Desmodur N 3300.

In beiden Versuchen wurde kontinuierlich gemischt und gefördert. Die Zeit bis zum Austritt des Extrudats aus dem Extruder betrug ca. zwei Minuten.

Teilschritt C)

Das Extrudat wurde direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug 1,0 mm. Der Film wurde nach Abkühlung auf Raumtemperatur aufgewickelt, nachdem zuvor eine der beiden silikonisierten Polyesterfolien entfernt wurde. In einem ergänzenden Versuch erfolgte die Beschichtung zwischen zwei zulaufenden, beidseitig silikonisierten, mit dem Polyacrylathaftklebstoff Durotac 280-1753 der Firma National Starch in einer Dicke von 50 μm vorbeschichteten Polyesterfolien.
Auch hier betrug die Dicke des Films 1,0 mm und der Film wurde ebenfalls nach Abkühlung auf Raumtemperatur aufgewickelt, nachdem zuvor eine der beiden silikonisierten Polyesterfolien entfernt wurde. Die aufgewickelten Filme wurden zwei Wochen bei Raumtemperatur gelagert und anschließend geprüft.

Die Prüfergebnisse sind in der folgenden Tabelle 5 zusammengefasst:

| | Umsetzung des Prepolymers mit Vestanat IPDI | | Umsetzung des Prepolymers mit Desmodur N 3300 | |
|---|---|---|---|---|
| | Film ohne Polyacrylat-Haftklebstoff | Film mit Durotac280-1753 | Film ohne Polyacrylat-Haftklebstoff | Film mit Durotac280-1753 |
| Zugfestigkeitlängs ($N/mm^2$) | 0,2 | n.b. | 1,8 | n.b. |
| Zugfestigkeit quer ($N/mm^2$) | 0,2 | n.b. | 1,9 | n.b. |
| Dehnung längs (%) | 680 | n.b. | 760 | n.b. |
| Dehnung quer (%) | 670 | n.b. | 770 | n.b. |
| Relaxation längs (%) | 67 | n.b. | 64 | n.b. |
| Relaxation quer (%) | 65 | n.b. | 64 | n.b. |
| Klebkraft , Stahl, 90°-Winkel, 300 mm/min (N/cm) | 4,7 | 8,4 | 2,9 | 7,3 |
| Haltezeit im Schertest bei Raumtemperatur (min) | 1100 | >10000 | 2200 | 9500 |
| Haltezeit im Schertest bei 70°C (min) | 50 | 5000 | 250 | 8950 |
| Schmelzbarkeit (geprüft bis 200 °C) | nicht schmelzbar | nicht schmelzbar | nicht schmelzbar | nicht schmelzbar |

Die Klebkraft des Haftklebstoffs Durotac280-1753, aufgetragen auf eine 25 μm dicke Polyesterfolie, betrug

zum Vergleich 5,9 N/cm.

**Vergleichsbeispiel 1**

Zur Herstellung eines chemisch vernetzten Polyurethanfilms wurde ein Verfahren in der folgenden Weise eingesetzt:

Teilschritt A)

Ein unverzweigtes, thermoplastisch verarbeitbares, hydroxyl-funktionalisiertes Polyurethan-Hotmelt-Prepolymer wurde durch homogenes Mischen und somit Umsetzen der folgenden Ausgangsstoffe in den angegebenen Mengenverhältnissen hergestellt:

Tabelle 6: Zusammensetzung eines unverzweigten, thermoplastisch verarbeitbaren, hydroxyl-funktionalisierten Polyurethan-Hotmelt-Prepolymers aus Vergleichsbeispiel 1

| Ausgangsstoff | Gewichtsanteil (Gew.%) | Anzahl der OH- beziehungsweise NCO-Gruppen, bezogen auf den prozentualen Gewichtsanteil | Prozentuales Verhältnis der Anzahl der OH- beziehungsweise NCO-Gruppen zueinander | Prozentuales Verhältnis der Anzahl der OH- beziehungsweise NCO-Gruppen tragenden Moleküle zueinander (idealisiert)* |
|---|---|---|---|---|
| Voranol P 400 | 24,57 | 114,08 mmol OH | 22,29 | 22,29 |
| | | | | |
| MP Diol | 5,14 | 114,00 mmol OH | 22,27 | 22,27 |
| Voranol 2000L | 40,38 | 39,93 mmol OH | 7,80 | 7,80 |
| Tinuvin 400 | 0,21 | | | |
| Tinuvin 292 | 0,10 | | | |
| Coscat 83 | 0,42 | | | |
| Aerosil R 202 | 2,08 | | | |
| Vestanat IPDI | 27,10 | 243,89 mmol NCO | 47,64 | 47,64 |
| Summe | 100,00 | 511,90 | 100,00 | 100.00 |
| *errechnet aus dem prozentualen Verhältnis der Anzahl der OH-Gruppen zueinander unter der stark idealisierten Annahme, dass das Voranol P400, das MP Diol und das Voranol 2000L exakt die Funktionalität 2 haben. | | | | |

Zunächst wurden alle aufgeführten Ausgangsstoffe außer dem MP Diol und dem Vestanat IPDI bei einer Temperatur von 70°C und einem Druck von 100 mbar 1,5 Stunden gemischt. Sodann wurde das MP Diol 15 Minuten lang zugemischt und anschließend das Vestanat IPDI, ebenfalls während einer Dauer von 15 Minuten. Durch die entstandene Reaktionswärme erwärmte sich die Mischung auf 100°C und wurde nun zu einem Teil in Vorratsbehälter abgefüllt. Ein anderer Teil wurde direkt in Teilschritt B) weiter verarbeitet.

Das NCO/OH-Verhältnis betrug 0,91. Der theoretische Gelpunkt errechnet sich zu 1,0. Das durch die Umsetzung entstandene unverzweigte, hydroxyl-funktionalisierte Polyurethan-Hotmelt-Prepolymer war bei Raumtemperatur fest und schmelzbar und somit thermoplastisch verarbeitbar. Am molekularen Aufbau des unverzweigten, thermoplastisch verarbeitbaren, hydroxyl-funktionalisierten Polyurethan-Hotmelt-Prepolymers waren keine trifunktionellen Moleküle beteiligt (0,0 % der beteiligten Moleküle waren trifunktionell). Somit konnten sich keine verzweigten Strukturen ausbilden. 92,20 % der am molekularen Aufbau des unverzweigten, thermoplastisch verarbeitbaren, hydroxyl-funktionalisierten Polyurethan-Hotmelt-Prepolymers beteiligten Moleküle hatten eine relative Molmasse von kleiner oder gleich 1000 (bei idealisierter Betrachtung).

Das entstandene Prepolymer war bei Raumtemperatur fest. Die komplexe Viskosität $\eta^*$ betrug bei Raumtemperatur (23°C) 16000 Pas und bei 70°C 500 Pas.
Das gewichtsgemittelte mittlere Molekulargewicht $M_W$ betrug 75000 g/mol, das zahlengemittelte mittlere Molekulargewicht $M_N$ 14800 g/mol.

Teilschritt B)

Das unverzweigte, thermoplastisch verarbeitbare, hydroxyl-funktionalisierte Polyurethan-Hotmelt-Prepolymer aus Teilschritt A) wurde einem auf 80°C vorgeheizten Doppelschneckenextruder kontinuierlich zugeführt. Das Polyisocyanat wurde gleichzeitig und an gleicher Stelle dem Doppelschneckenextruder in Form feiner Tröpfchen kontinuierlich zudosiert. Als zudosiertes Polyisocyanat fand bei einem Teil der Versuche Vestanat IPDI Verwendung, bei einem anderen Teil Desmodur N3300.
In beiden Versuchen wurde ein NCO/OH-Verhältnis von 1,05 eingestellt.
Somit betrugen die Mischungsverhältnisse:
100 Gewichtsteile Prepolymer : 4,20 Gewichtsteile Vestanat IPDI bzw.
100 Gewichtsteile Prepolymer : 7,28 Gewichtsteile Desmodur N 3300.
In beiden Versuchen wurde kontinuierlich gemischt und gefördert. Die Zeit bis zum Austritt des Extrudats aus dem Extruder betrug ca. zwei Minuten.

Teilschritt C)

Das Extrudat wurde direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug 1,0 mm. Der Film wurde nach Abkühlung auf Raumtemperatur aufgewickelt, nachdem zuvor eine der beiden silikonisierten Polyesterfolien entfernt wurde. In einem ergänzenden Versuch erfolgte die Beschichtung zwischen zwei zulaufenden, beidseitig silikonisierten, mit dem Polyacrylathaftklebstoff Durotac 280-1753 der Firma National Starch in einer Dicke von 50 μm vorbeschichteten Polyesterfolien.
Auch hier betrug die Dicke des Films 1,0 mm und der Film wurde ebenfalls nach Abkühlung auf Raumtemperatur aufgewickelt, nachdem zuvor eine der beiden silikonisierten Polyesterfolien entfernt wurde. Die aufgewickelten Filme wurden zwei Wochen bei Raumtemperatur gelagert und anschließend geprüft.
Die Prüfergebnisse sind in der folgenden Tabelle 7 zusammengefasst:

| | Umsetzung des Prepolymers mit Vestanat IPDI | | Umsetzung des Prepolymers mit Desmodur N 3300 | |
|---|---|---|---|---|
| | Film ohne Polyacrylat-Haftklebstoff | Film mit Durotac280-1753 | Film ohne Polyacrylat-Haftklebstoff | Film mit Durotac280-1753 |
| Zugfestigkeitlängs ($N/mm^2$) | 0,2 | n.b. | 0,9 | n.b. |
| Zugfestigkeit quer ($N/mm^2$) | 0,2 | n.b. | 0,7 | n.b. |
| Dehnung längs (%) | 1180 | n.b. | 980 | n.b. |
| Dehnung quer (%) | 1210 | n.b. | 990 | n.b. |
| Relaxation längs (%) | 95 | n.b. | 89 | n.b. |
| Relaxation quer (%) | 94 | n.b. | 91 | n.b. |
| Klebkraft , Stahl, 90°-Winkel, 300 mm/min (N/cm) | 3,5 | 7,4 | 2,2 | 5,6 |
| Haltezeit im Schertest bei Raumtemperatur (min) | 100 | 120 | 210 | 320 |
| Haltezeit im Schertest bei 70°C (min) | <1 | <1 | 5 | 7 |

(fortgesetzt)

| | Umsetzung des Prepolymers mit Vestanat IPDI | | Umsetzung des Prepolymers mit Desmodur N 3300 | |
|---|---|---|---|---|
| | Film ohne Polyacrylat-Haftklebstoff | Film mit Durotac280-1753 | Film ohne Polyacrylat-Haftklebstoff | Film mit Durotac280-1753 |
| Schmelzbarkeit (geprüft bis 200 °C) | schmelzbar | schmelzbar | nicht schmelzbar | nicht schmelzbar |

Die Klebkraft des Haftklebstoffs Durotac280-1753, aufgetragen auf eine 25 µm dicke Polyesterfolie, betrug zum Vergleich 5,9 N/cm.

Bei Verwendung eines unverzweigten, thermoplastisch verarbeitbaren, hydroxyl-funktionalisierten Polyurethan-Hotmelt-Prepolymers resultierten sehr geringe Kohäsionskräfte des Polyurethanfilms, auch dann, wenn im Teilschritt B mit einem trifunktionellen Polyisocyanat vernetzt wurde. Die Folge waren sehr geringe Haltezeiten im Schertest, insbesondere bei 70°C.

## Patentansprüche

**1.** Verfahren zur Herstellung eines chemisch vernetzten Polyurethanfilms umfassend die folgenden Teilschritte:

A) Chemische Umsetzung einer Mischung umfassend mehrere Polyole mit einem oder mehreren Polyisocyanaten, wobei mindestens eines der Polyole oder mindestens eines der Polyisocyanate tri- oder höherfunktionelle Moleküle enthält und wobei das Verhältnis der Gesamtanzahl der Isocyanatgruppen zur Gesamtanzahl der Hydroxylgruppen kleiner als 1,0 ist, zu einem hydroxyl-funktionalisierten, schmelzfähigen Reaktionsprodukt, im Folgenden hydroxylfunktionalisiertes Polyurethan-Hotmelt-Prepolymer genannt,
B) Einbringen des Polyurethan-Hotmelt-Prepolymers sowie eines oder mehrerer Polyisocyanate in ein kontinuierlich arbeitendes Mischaggregat, wobei in dem Mischaggregat eine chemische Umsetzung des hydroxylfunktionalisierten Polyurethan-Hotmelt-Prepolymers in der Schmelze mit den Polyisocyanaten stattfindet.
C) Beschichtung der aus dem Mischaggregat austretenden Schmelze auf ein zulaufendes bahnförmiges Material oder zwischen zwei zulaufenden bahnförmigen Materialien, wobei die im Teilschritt B) gestartete Umsetzung fortschreitet.

**2.** Verfahren zur Herstellung eines chemisch vernetzten Polyurethanfilms gemäß Anspruch 1, **dadurch gekennzeichnet, dass**
das hydroxylfunktionalisierte, schmelzfähige Reaktionsprodukt aus Schritt A) verzweigt ist.

**3.** Verfahren zur Herstellung eines chemisch vernetzten Polyurethanfilms gemäß einem der vorangehenden Anmsprüche, **dadurch gekennzeichnet, dass**
das Verhältnis der Gesamtanzahl der Isocyanat-Gruppen zur Gesamtanzahl der Hydroxylgruppen der an der chemischen Umsetzung zum hydroxyl-funktionalisierten Polyurethan-Hotmelt-Prepolymer beteiligten Polyisocyanate und Polyole zwischen größer 0,90 und kleiner 0,98 liegt.

**4.** Verfahren zur Herstellung eines chemisch vernetzten Polyurethanfilms gemäß einem der vorangehenden Ansprüche, **dadurch gekennzeichnet, dass** der anzahlmäßige Anteil der an der chemischen Umsetzung zum hydroxylfunktionalisierten Polyurethan-Hotmelt-Prepolymer beteiligten tri- oder höherfunktionellen Moleküle mindestens 0,5 % beträgt.

**5.** Verfahren zur Herstellung eines chemisch vernetzten Polyurethanfilms gemäß einem der vorangehenden Ansprüche, **dadurch gekennzeichnet, dass** der anzahlmäßige Anteil der an der chemischen Umsetzung zum hydroxylfunktionalisierten Polyurethan-Hotmelt-Prepolymer beteiligten Moleküle mit einer relativen Molmasse von kleiner oder gleich 1000 mindestens 70 % beträgt.

**6.** Verfahren zur Herstellung eines chemisch vernetzten Polyurethanfilms gemäß einem der vorangehenden Ansprüche, **dadurch gekennzeichnet, dass** die an der chemischen Umsetzung zum hydroxyl-funktionalisierten Polyurethan-Hotmelt-Prepolymer beteiligten Polyole zu einem Gewichtsanteil von größer 70 Gew.%, bezogen auf den Polyolanteil, Polyetherpolyole sind.

7. Verfahren zur Herstellung eines chemisch vernetzten Polyurethanfilms gemäß einem der vorangehenden Ansprüche, **dadurch gekennzeichnet, dass** an der chemischen Umsetzung zum hydroxyl-funktionalisierten Polyurethan-Hotmelt-Prepolymer zusatzlich zu den Polyolen aucn andere isocyanatreaktive Stoffe-betelligt sind.

8. Verfahren zur Herstellung eines chemisch vernetzten Polyurethanfilms gemäß einem der vorangehenden Ansprüche, **dadurch gekennzeichnet, dass** mindestens eines der an der chemischen Umsetzung zum hydroxyl-funktionalisierten Polyurethan-Hotmelt-Prepolymer beteiligten Polyisocyanate eine Funktionalität von zwei oder größer zwei hat.

9. Verfahren zur Herstellung eines chemisch vernetzten Polyurethanfilms gemäß einem der vorangehenden Ansprüche, **dadurch gekennzeichnet, dass** die an der chemischen Umsetzung zum hydroxyl-funktionalisierten Polyurethan-Hotmelt-Prepolymer beteiligten Polyisocyanate zu einem Gewichtsanteil von größer 70 Gew.%, bezogen auf den Polyisocyanatanteil, aliphatische oder cycloaliphatische Typen sind.

10. Verfahren zur Herstellung eines chemisch vernetzten Polyurethanfilms gemäß einem der vorangehenden Ansprüche, **dadurch gekennzeichnet, dass** die an der chemischen Umsetzung zum hydroxyl-funktionalisierten Polyurethan-Hotmelt-Prepolymer beteiligten Polyisocyanate zu einem Gewichtsanteil von größer 70 Gew.%, bezogen auf den Polyisocyanatanteil, Isophorondiisocyanat enthalten.

11. Verfahren zur Herstellung eines chemisch vernetzten Polyurethanfilms gemäß einem der vorangehenden Ansprüche, **dadurch gekennzeichnet, dass** die chemische Umsetzung zum hydroxyl-funktionalisierten Polyurethan-Hotmelt-Prepolymer unter Zusatz eines Katalysators erfolgt.

12. Verfahren zur Herstellung eines chemisch vernetzten Polyurethanfilms gemäß einem der vorangehenden Ansprüche, **dadurch gekennzeichnet, dass** die chemische Umsetzung zum hydroxyl-funktionalisierten Polyurethan-Hotmelt-Prepolymer unter Zusatz eines Bismuth und Kohlenstoff enthaltenden Katalysators erfolgt.

13. Verfahren zur Herstellung eines chemisch vernetzten Polyurethanfilms gemäß einem der vorangehenden Ansprüche, **dadurch gekennzeichnet, dass** das hydroxyl-funktionalisierte Polyurethan-Hotmelt-Prepolymer Füllstoffe, Harze, Hilfs- und Zusatzstoffe enthält.

14. Verfahren zur Herstellung eines chemisch vernetzten Polyurethanfilms gemäß einem der vorangehenden Ansprüche, **dadurch gekennzeichnet, dass** das Verhältnis der Gesamtanzahl der Isocyanat-Gruppen zur Gesamtanzahl der Hydroxylgruppen während der chemischen Umsetzung des hydroxyl-funktionalisierten Polyurethan-Hotmelt-Prepolymers mit den Polyisocyanten in der Schmelze in einem kontinuierlich arbeitenden Mischaggregat zwischen größer 0,90 und kleiner 1,2 liegt.

15. Verfahren zur Herstellung eines chemisch vernetzten Polyurethanfilms gemäß einem der vorangehenden Ansprüche, **dadurch gekennzeichnet, dass** die chemische Umsetzung des hydroxyl-funktionalisierten Polyurethan-Hotmelt-Prepolymers in der Schmelze mit einem oder mehreren Polyisocyanaten kontinuierlich in einem Extruder erfolgt.

16. Verfahren zur Herstellung eines chemisch vernetzten Polyurethanfilms gemäß einem der vorangehenden Ansprüche, **dadurch gekennzeichnet, dass** die chemische Umsetzung des hydroxyl-funktionalisierten Polyurethan-Hotmelt-Prepolymers in der Schmelze mit einem oder mehreren Polyisocyanaten kontinuierlich in einer Zweikomponenten-Misch- und Dosieranlage erfolgt.

17. Verfahren zur Herstellung eines chemisch vernetzten Polyurethanfilms gemäß einem der vorangehenden Ansprüche, **dadurch gekennzeichnet, dass** die komplexe Viskosität des hydroxyl-funktionalisierten Polyurethan-Hotmelt-Prepolymers, gemessen bei 10 rad / Sekunde und 23°C größer 8000 Pas beträgt.

18. Verfahren zur Herstellung eines chemisch vernetzten Polyurethanfilms gemäß einem der vorangehenden Ansprüche, **dadurch gekennzeichnet, dass** die komplexe Viskosität des hydroxyl-funktionalisierten Polyurethan-Hotmelt-Prepolymers, gemessen bei 10 rad / Sekunde und 70°C größer 300 Pasbeträgt.

19. Verfahren zur Herstellung eines chemisch vernetzten Polyurethanfilms gemäß einem der vorangehenden Ansprüche, **dadurch gekennzeichnet, dass** der vernetzte Polyurethanfilm eine Dicke zwischen 20 μm und 3000 μm hat.

**20.** Verfahren zur Herstellung eines chemisch vernetzten Polyurethanfllms gemäß einem der vorangehenden Ansprüche, **dadurch gekennzeichnet, dass** die Herstellung lösungsmittelfrei erfolgt.

**21.** Verfahren zur Herstellung eines chemisch vernetzten Polyurethanfilms gemäß einem der vorangehenden Ansprüche, **dadurch gekennzeichnet, dass** die chemische Umsetzung zum hydroxyl-funktionalisierten Polyurethan-Hotmelt-Prepolymer gemäß Teilschritt A) kontinuierlich erfolgt.

**22.** Verwendung eines chemisch vernetzten Polyurethanfilms, erhältlich nach einem Verfahren gemäß einem der Ansprüche 1 bis 21 als Trägerschicht in einem Klebeband oder in einem selbstklebenden Artikel.

**23.** Verfahren gemäß einem der Ansprüche 1 bis 21, **dadurch gekennzeichnet, dass**
der derart erhaltene chemisch vernetzte Polyurethanfilm als Haftklebstoffschicht in einem Klebeband oder in einem selbstklebenden Artikel verwendet wird.

**24.** Verfahren gemäß einem der Ansprüche 1 bis 21, **dadurch gekennzeichnet, dass**
der derart erhaltene chemisch vernetzte Polyurethanfilm als Funktionsschicht in einem Klebeband oder in einem selbstklebenden Artikel verwendet wird.

## Claims

**1.** Process for producing a chemically crosslinked polyurethane film, comprising the following substeps:

A) chemically reacting a mixture comprising two or more polyols with one or more polyisocyanates, at least one of the polyols or at least one of the polyisocyanates comprising molecules having a functionality of three or more, and the ratio of the total number of isocyanate groups to the total number of hydroxyl groups being less than 1.0, to give a hydroxyl-functionalized, meltable reaction product, referred to below as hydroxyl-functionalized polyurethane hotmelt prepolymer,
B) introducing the polyurethane hotmelt prepolymer and one or more polyisocyanates into a continuously operating mixing assembly wherein a chemical reaction takes place of the hydroxyl-functionalized polyurethane hotmelt prepolymer in the melt with the polyisocyanates,
C) coating the melt emerging from the mixing assembly onto an incoming web-form material or between two incoming web-form materials, in the course of which the reaction started in substep B) continues.

**2.** Process for producing a chemically crosslinked polyurethane film according to Claim 1, **characterized in that** the hydroxyl-functionalized, meltable reaction product from step A) is branched.

**3.** Process for producing a chemically crosslinked polyurethane film according to any of the preceding claims, **characterized in that** the ratio of the total number of isocyanate groups to the total number of hydroxyl groups in the polyisocyanates and polyols involved in the chemical reaction to give the hydroxyl-functionalized polyurethane hotmelt prepolymer is between greater than 0.90 and less than 0.98.

**4.** Process for producing a chemically crosslinked polyurethane film according to any of the preceding claims, **characterized in that** the numerical fraction of the molecules having a functionality of three or more that are involved in the chemical reaction to give the hydroxyl-functionalized polyurethane hotmelt prepolymer is at least 0.5%.

**5.** Process for producing a chemically crosslinked polyurethane film according to any of the preceding claims, **characterized in that** the numerical fraction of the molecules involved in the chemical reaction to give the hydroxyl-functionalized polyurethane hotmelt prepolymer that have a relative molar mass of less than or equal to 1000 is at least 70%.

**6.** Process for producing a chemically crosslinked polyurethane film according to any of the preceding claims, **characterized in that** a weight fraction of greater than 70% by weight, based on the polyol fraction, of the polyols involved in the chemical reaction to give the hydroxyl-functionalized polyurethane hotmelt prepolymer are polyether polyols.

**7.** Process for producing a chemically crosslinked polyurethane film according to any of the preceding claims, **char-**

**acterized in that** in addition to the polyols there are also other isocyanate-reactive compounds involved in the chemical reaction to give the hydroxyl-functionalized polyurethane hotmelt prepolymer.

8. Process for producing a chemically crosslinked polyurethane film according to any of the preceding claims, **characterized in that** at least one of the polyisocyanates involved in the chemical reaction to give the hydroxyl-functionalized polyurethane hotmelt prepolymer has a functionality of two or greater than two.

9. Process for producing a chemically crosslinked polyurethane film according to any of the preceding claims, **characterized in that** a weight fraction of greater than 70% by weight, based on the polyisocyanate fraction, of the polyisocyanates involved in the chemical reaction to give the hydroxyl-functionalized polyurethane hotmelt prepolymer are aliphatic or cycloaliphatic types.

10. Process for producing a chemically crosslinked polyurethane film according to any of the preceding claims, **characterized in that** a weight fraction of greater than 70% by weight, based on the polyisocyanate fraction, of the polyisocyanates involved in the chemical reaction to give the hydroxyl-functionalized polyurethane hotmelt prepolymer comprise isophorone diisocyanate.

11. Process for producing a chemically crosslinked polyurethane film according to any of the preceding claims, **characterized in that** the chemical reaction to give the hydroxyl-functionalized polyurethane hotmelt prepolymer takes place with addition of a catalyst.

12. Process for producing a chemically crosslinked polyurethane film according to any of the preceding claims, **characterized in that** the chemical reaction to give the hydroxyl-functionalized polyurethane hotmelt prepolymer takes place with addition of a catalyst comprising bismuth and carbon.

13. Process for producing a chemically crosslinked polyurethane film according to any of the preceding claims, **characterized in that** the hydroxyl-functionalized polyurethane hotmelt prepolymer comprises fillers, resins, auxiliaries and additives.

14. Process for producing a chemically crosslinked polyurethane film according to any of the preceding claims, **characterized in that** the ratio of the total number of isocyanate groups to the total number of hydroxyl groups during the chemical reaction of the hydroxyl-functionalized polyurethane hotmelt prepolymer with the polyisocyanates in the melt in a continuously operating mixing assembly is between greater than 0.90 and less than 1.2.

15. Process for producing a chemically crosslinked polyurethane film according to any of the preceding claims, **characterized in that** the chemical reaction of the hydroxyl-functionalized polyurethane hotmelt prepolymer in the melt with one or more polyisocyanates takes place continuously in an extruder.

16. Process for producing a chemically crosslinked polyurethane film according to any of the preceding claims, **characterized in that** the chemical reaction of the hydroxyl-functionalized polyurethane hotmelt prepolymer in the melt with one or more polyisocyanates takes place continuously in a two-component mixing and metering unit.

17. Process for producing a chemically crosslinked polyurethane film according to any of the preceding claims, **characterized in that** the complex viscosity of the hydroxyl-functionalized polyurethane hotmelt prepolymer, measured at 10 rad/second and 23°C, is greater than 8000 Pas.

18. Process for producing a chemically crosslinked polyurethane film according to any of the preceding claims, **characterized in that** the complex viscosity of the hydroxyl-functionalized polyurethane hotmelt prepolymer, measured at 10 rad/second and 70°C, is greater than 300 Pas.

19. Process for producing a chemically crosslinked polyurethane film according to any of the preceding claims, **characterized in that** the crosslinked polyurethane film has a thickness of between 20 μm and 3000 μm.

20. Process for producing a chemically crosslinked polyurethane film according to any of the preceding claims, **characterized in that** the production takes place solventlessly.

21. Process for producing a chemically crosslinked polyurethane film according to any of the preceding claims, **characterized in that** the chemical reaction to give the hydroxyl-functionalized polyurethane hotmelt prepolymer in

accordance with substep A) takes place continuously.

**22.** Use of a chemically crosslinked polyurethane film obtainable by a process according to any of Claims 1 to 21 as a carrier layer in an adhesive tape or in a self-adhesive article.

**23.** Process according to any of Claims 1 to 21, **characterized in that** the chemically crosslinked polyurethane film obtained in such a manner is used as a pressure-sensitive adhesive layer in an adhesive tape or in a self-adhesive article.

**24.** Process according to any of Claims 1 to 21, **characterized in that** the chemically crosslinked polyurethane film obtained in such a manner is used as a functional layer in an adhesive tape or in a self-adhesive article.

## Revendications

**1.** Procédé pour la préparation d'un film de polyuréthane chimiquement réticulé, comprenant les étapes partielles suivantes :

A) transformation chimique d'un mélange comprenant plusieurs polyols avec un ou plusieurs polyisocyanates, au moins un des polyols ou au moins un des polyisocyanates contenant des molécules trifonctionnelles ou à fonctionnalité supérieure et le rapport du nombre total des groupes isocyanate au nombre total des groupes hydroxyle étant inférieur à 1,0, en un produit de réaction à fonctionnalité hydroxyle, fusible, appelé prépolymère thermofusible de polyuréthane à fonctionnalité hydroxyle,
B) introduction du prépolymère thermofusible de polyuréthane ainsi que d'un ou plusieurs polyisocyanates dans un appareil de mélange fonctionnant en continu, une transformation chimique du prépolymère thermofusible de polyuréthane à fonctionnalité hydroxyle avec les polyisocyanates ayant lieu dans la masse fondue, dans l'appareil de mélange,
C) revêtement de la masse fondue sortant de l'appareil de mélange sur un matériau en forme de bande alimenté ou entre deux matériaux en forme de bande alimentés, la transformation démarrée dans l'étape partielle B) évoluant.

**2.** Procédé pour la préparation d'un film de polyuréthane chimiquement réticulé selon la revendication 1, **caractérisé en ce que** le produit de réaction fusible, à fonctionnalité hydroxyle de l'étape A) est ramifié.

**3.** Procédé pour la préparation d'un film de polyuréthane chimiquement réticulé selon l'une quelconque des revendications précédentes, **caractérisé en ce que** le rapport du nombre total des groupes isocyanate au nombre total des groupes hydroxyle des polyisocyanates et des polyols participant à la transformation chimique en prépolymère thermofusible de polyuréthane à fonctionnalité hydroxyle se situe entre plus de 0,90 et moins de 0,98.

**4.** Procédé pour la préparation d'un film de polyuréthane chimiquement réticulé selon l'une quelconque des revendications précédentes, **caractérisé en ce que** la proportion en nombre des molécules trifonctionnelles ou à fonctionnalité supérieure participant à la transformation chimique en prépolymère thermofusible de polyuréthane à fonctionnalité hydroxyle est d'au moins 0,5%.

**5.** Procédé pour la préparation d'un film de polyuréthane chimiquement réticulé selon l'une quelconque des revendications précédentes, **caractérisé en ce que** la proportion en nombre des molécules présentant une masse molaire relative inférieure ou égale à 1000 participant à la transformation chimique en prépolymère thermofusible de polyuréthane à fonctionnalité hydroxyle est d'au moins 70%.

**6.** Procédé pour la préparation d'un film de polyuréthane chimiquement réticulé selon l'une quelconque des revendications précédentes, **caractérisé en ce que** les polyols participant à la transformation chimique en prépolymère thermofusible de polyuréthane à fonctionnalité hydroxyle sont, à raison d'une proportion pondérale supérieure à 70% en poids par rapport à la proportion de polyol, des polyétherpolyols.

**7.** Procédé pour la préparation d'un film de polyuréthane chimiquement réticulé selon l'une quelconque des revendications précédentes, **caractérisé en ce qu'**en plus des polyols, d'autres substances réactives avec les isocyanates participent également à la transformation chimique en prépolymère thermofusible de polyuréthane à fonctionnalité hydroxyle.

**8.** Procédé pour la préparation d'un film de polyuréthane chimiquement réticulé selon l'une quelconque des revendications précédentes, **caractérisé en ce qu'**au moins un des polyisocyanates participant à la transformation chimique en prépolymère thermofusible de polyuréthane à fonctionnalité hydroxyle présente une fonctionnalité de deux ou plus.

**9.** Procédé pour la préparation d'un film de polyuréthane chimiquement réticulé selon l'une quelconque des revendications précédentes, **caractérisé en ce que** les polyisocyanates participant à la transformation chimique en prépolymère thermofusible de polyuréthane à fonctionnalité hydroxyle sont, à raison d'une proportion pondérale supérieure à 70% en poids par rapport à la proportion de polyisocyanate, de type aliphatique ou cycloaliphatique.

**10.** Procédé pour la préparation d'un film de polyuréthane chimiquement réticulé selon l'une quelconque des revendications précédentes, **caractérisé en ce que** les polyisocyanates participant à la transformation chimique en prépolymère thermofusible de polyuréthane à fonctionnalité hydroxyle contiennent, à raison d'une proportion pondérale supérieure à 70% en poids par rapport à la proportion de polyisocyanate, de l'isophoronediisocyanate.

**11.** Procédé pour la préparation d'un film de polyuréthane chimiquement réticulé selon l'une quelconque des revendications précédentes, **caractérisé en ce que** la transformation chimique en prépolymère thermofusible de polyuréthane à fonctionnalité hydroxyle a lieu avec addition d'un catalyseur.

**12.** Procédé pour la préparation d'un film de polyuréthane chimiquement réticulé selon l'une quelconque des revendications précédentes, **caractérisé en ce que** la transformation chimique en prépolymère thermofusible de polyuréthane à fonctionnalité hydroxyle a lieu avec addition d'un catalyseur contenant du bismuth et du carbone.

**13.** Procédé pour la préparation d'un film de polyuréthane chimiquement réticulé selon l'une quelconque des revendications précédentes, **caractérisé en ce que** le prépolymère thermofusible de polyuréthane à fonctionnalité hydroxyle contient des charges, des résines, des adjuvants et des additifs.

**14.** Procédé pour la préparation d'un film de polyuréthane chimiquement réticulé selon l'une quelconque des revendications précédentes, **caractérisé en ce que** le rapport du nombre total des groupes isocyanate au nombre total des groupes hydroxyle pendant la transformation chimique du prépolymère thermofusible de polyuréthane à fonctionnalité hydroxyle avec les polyisocyanates en masse fondue dans un appareil de mélange fonctionnant en continu se situe entre plus de 0,90 et moins de 1,2.

**15.** Procédé pour la préparation d'un film de polyuréthane chimiquement réticulé selon l'une quelconque des revendications précédentes, **caractérisé en ce que** la transformation chimique du prépolymère thermofusible de polyuréthane à fonctionnalité hydroxyle en masse fondue avec un ou plusieurs polyisocyanates a lieu en continu dans une extrudeuse.

**16.** Procédé pour la préparation d'un film de polyuréthane chimiquement réticulé selon l'une quelconque des revendications précédentes, **caractérisé en ce que** la transformation chimique du prépolymère thermofusible de polyuréthane à fonctionnalité hydroxyle en masse fondue avec un ou plusieurs polyisocyanates a lieu en continu dans une installation de mélange et de dosage de deux composants.

**17.** Procédé pour la préparation d'un film de polyuréthane chimiquement réticulé selon l'une quelconque des revendications précédentes, **caractérisé en ce que** la viscosité complexe du prépolymère thermofusible de polyuréthane à fonctionnalité hydroxyle, mesurée à 10 rad/seconde et à 23°C est supérieure à 8000 Pa.s.

**18.** Procédé pour la préparation d'un film de polyuréthane chimiquement réticulé selon l'une quelconque des revendications précédentes, **caractérisé en ce que** la viscosité complexe du prépolymère thermofusible de polyuréthane à fonctionnalité hydroxyle, mesurée à 10 rad/seconde et à 70°C est supérieure à 300 Pa.s.

**19.** Procédé pour la préparation d'un film de polyuréthane chimiquement réticulé selon l'une quelconque des revendications précédentes, **caractérisé en ce que** le film de polyuréthane réticulé présente une épaisseur entre 20 μm et 3000 μm.

**20.** Procédé pour la préparation d'un film de polyuréthane chimiquement réticulé selon l'une quelconque des revendications précédentes, **caractérisé en ce que** la préparation a lieu en l'absence de solvant.

21. Procédé pour la préparation d'un film de polyuréthane chimiquement réticulé selon l'une quelconque des revendications précédentes, **caractérisé en ce que** la transformation chimique en prépolymère thermofusible de polyuréthane à fonctionnalité hydroxyle selon l'étape partielle A) a lieu en continu.

22. Utilisation d'un film de polyuréthane chimiquement réticulé, pouvant être obtenu selon un procédé selon l'une quelconque des revendications 1 à 21 comme couche support dans une bande adhésive ou dans un objet autoadhésif.

23. Procédé selon l'une quelconque des revendications 1 à 21, **caractérisé en ce que** le film de polyuréthane chimiquement réticulé ainsi obtenu est utilisé comme couche autoadhésive dans une bande adhésive ou un objet autoadhésif.

24. Procédé selon l'une quelconque des revendications 1 à 21, **caractérisé en ce que** le film de polyuréthane chimiquement réticulé ainsi obtenu est utilisé comme couche fonctionnelle dans une bande adhésive ou un objet autoadhésif.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0259094 B1
- EP 0305161 B1
- EP 0894841 B1
- EP 1095993 B1
- DE 10003318 A1
- DE 10252088 A1
- DE 2059570 A
- DE 102005039933
- DE 2248382 C2
- EP 0135111 B1
- DE 1964834 A
- DE 2302564 C3
- DE 102004044086 A1
- US 5712216 A
- US 5693584 A
- WO 9956874 A
- WO 9951661 A
- WO 9959719 A
- WO 9964152 A
- US 5952261 A
- WO 9964493 A
- WO 9951657 A


### In der Beschreibung aufgeführte Nicht-Patentliteratur


- **Gaechter ; Müller.** Taschenbuch der Kunststoff-Additive. München, 1979
- Encycl. Polym. Sci. Technol. vol. 14, 125-148